(19) Europäisches Patentamt
European Patent Office
Office européen des brevets

(11) EP 4 328 509 A1

(12) EUROPEAN PATENT APPLICATION
published in accordance with Art. 153(4) EPC

(43) Date of publication:
28.02.2024 Bulletin 2024/09

(51) International Patent Classification (IPC):
F24F 11/39 (2018.01)      F24F 11/52 (2018.01)
F24F 11/64 (2018.01)      F24F 11/77 (2018.01)
F24F 3/16 (2021.01)       F24F 13/28 (2006.01)
F24F 110/40 (2018.01)

(21) Application number: 22847863.2

(22) Date of filing: 24.03.2022

(52) Cooperative Patent Classification (CPC):
F24F 3/16; F24F 11/39; F24F 11/52; F24F 11/526;
F24F 11/64; F24F 11/74; F24F 11/77; F24F 11/79;
F24F 11/88; F24F 13/28; F24F 2110/40;
Y02B 30/70

(86) International application number:
PCT/CN2022/082789

(87) International publication number:
WO 2023/005243 (02.02.2023 Gazette 2023/05)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.07.2021 CN 202110855017

(71) Applicants:
• GD Midea Heating & Ventilating Equipment Co.,
Ltd.
Foshan, Guangdong 528311 (CN)
• HEFEI MIDEA HEATING & VENTILATING
EQUIPMENT
CO., LTD.
Boyan Science Park,
High-Tech Zone, Hefei
Anhui 230088 (CN)

(72) Inventors:
• YANG, Kun
Foshan, Guangdong 528311 (CN)
• ZHOU, Baisong
Foshan, Guangdong 528311 (CN)
• ZHUANG, Liqiang
Foshan, Guangdong 528311 (CN)

(74) Representative: Whitlock, Holly Elizabeth Ann et al
Maucher Jenkins
Seventh Floor Offices
Artillery House
11-19 Artillery Row
London SW1P 1RT (GB)

(54) INDOOR UNIT FILTER SCREEN DETECTION METHOD, INDOOR UNIT, AIR CONDITIONER, AND READABLE STORAGE MEDIUM

(57) The present application provides an indoor unit filter screen detection method, an indoor unit, an air conditioner, and a readable storage medium. The indoor unit filter screen detection method comprises: obtaining a first resistance difference value of a filter screen under a set air volume value; determining a first outlet static pressure value during the operation of the indoor unit; and determining the filth blockage condition of the filter screen according to a numerical relationship between the first outlet static pressure value and a set outlet static pressure value, and the first resistance difference value. In the present application, the filth blockage condition of the filter screen is detected according to the numerical relationship between the first resistance difference value of the filter screen, and the first outlet static pressure value and the set outlet static pressure value, such that the filth blockage condition of the filter screen can be determined in time during the operation of the indoor unit.

EP 4 328 509 A1

Start

Obtain a first resistance difference value of the filter mesh under a preset air volume value ~102

Determine a first external static pressure value in an operation process of the indoor unit ~104

Determine a dirty blockage situation of the filter mesh according to a numerical relationship between the first external static pressure value and the preset external static pressure value, and the first resistance difference value ~106

End

FIG. 1

## Description

This application claims priority to Chinese patent application No. 202110855017.5, filed with CNIPA on July 28, 2021, and entitled "method for detecting filter mesh of indoor unit, indoor unit, air conditioner and readable storage medium".
The entire contents of which are incorporated herein by reference.

## TECHNICAL FIELD

The present application relates to the field of air conditioner technologies, and more particularly, to a method for detecting a filter mesh of an indoor unit, an apparatus for detecting a filter mesh of an indoor unit, an indoor unit, an air conditioner and a readable storage medium.

## BACKGROUND

In an operation process of an air conditioner, air after heat exchange may be exhausted by an indoor unit through a filter mesh, and the filter mesh may filter dust in the air. After the indoor unit is operated for a period of time, a large amount of dust may be accumulated on the filter mesh, which causes the filter mesh to be blocked, and not only the performance of heat exchange of the air conditioner may be affected, the air filtering effect of the filter mesh may also be reduced. The existing air conditioners are not provided with a function for accurately detecting a dirty blockage situation of a filter mesh. Thus, how to detect the dirty blockage situation of the filter mesh of the air conditioner has become a problem to be solved urgently.

## SUMMARY

The present application aims to solve one of the technical problems existing in the related art or related technologies.
For this purpose, in accordance with a first aspect of the present application, a method for detecting a filter mesh of an indoor unit is provided.
According to a second aspect of the present application, an apparatus for detecting a filter mesh of an indoor unit is provided.
According to a third aspect of the present application, an indoor unit is provided.
According to a fourth aspect of the present application, an air conditioner is provided.
According to a fifth aspect of the present application, a readable storage medium is provided.
In view of this, according to the first aspect of the present application, the method for detecting the filter mesh of the indoor unit is provided, wherein the indoor unit includes the filter mesh. The method for detecting the filter mesh includes: obtaining a first resistance difference value of the filter mesh under a preset air volume value; determining a first external static pressure value in an operating process of the indoor unit; determining a dirty blockage situation of the filter mesh according to a numerical relationship between the first external static pressure value and a preset external static pressure value, and the first resistance difference value.
The method for detecting the filter mesh of the indoor unit provided in the present application may detect whether there exists the dirty blockage situation in the filter mesh of the indoor unit. When the indoor unit is in operation, air before heat exchange enters the indoor unit through a return air inlet of the indoor unit, the filter mesh of the indoor unit is arranged at the return air inlet and is used for filtering the air passing through the return air inlet to achieve an air purification function.
The filter mesh has an initial resistance value and a final resistance value. The initial resistance value is the resistance value of the filter mesh after leaving the factory, that is, the resistance value of the filter mesh in an initial clean state, and the final resistance value is the resistance value of the filter mesh when the filter mesh needs to be cleaned or replaced. The resistance difference value may be obtained by calculating the difference value between the final resistance value and the initial resistance value. When the air conditioner is operated at different air volumes, the resistance difference values of the filter mesh are also different. When the indoor unit is controlled to be operated at the preset air volume, the first resistance difference value corresponding to the preset air volume is obtained. The first external static pressure value of the indoor unit is determined in the current operating state of the indoor unit, the first external static pressure value is the external static pressure value of the indoor unit during the operation of the indoor unit under the current hardware condition of the indoor unit. The preset external static pressure value is a pre-stored external static pressure value corresponding to the preset air volume value, and the external static pressure value is preset. The preset external static pressure value is collected after the air conditioner is mounted. That is, the external static pressure value collected by the filter mesh during operation of a new air conditioner is the preset external static pressure value. The dirty blockage situation of the filter may be determined according to the numerical relationship between the first external static pressure value and the preset external static pressure value, and the first resistance difference value.

It can be understood that, the external static pressure value collected during the operation of the air conditioner may be changed with the filth blockage of the filter mesh. Thus, the dirty blockage situation of the filter mesh can be determined according to the numerical relationship between the first external static pressure value and the preset external static pressure value, and the first resistance difference value.

In the present application, the dirty blockage situation of the filter mesh is detected through the first resistance difference value of the filter mesh and the static pressure difference value of the air conditioner, the dirty blockage situation of the filter mesh can be determined in time in the operation process of the air conditioner, and an accuracy and an instantaneity of determination of the dirty blockage situation of the filter mesh are improved as compared to the related art.

It is worth noting that, the resistance difference value is obtained by calculating the difference value between the initial resistance value and the final resistance value of the filter mesh, so the resistance difference value is the resistance change value of the filter mesh from the initial clean state to the filth blockage state. The first resistance difference value is related to the air volume of the current indoor unit in operation. The first resistance difference value of the filter mesh is determined according to the air volume of the indoor unit in operation. The preset external static pressure value is the external static pressure value obtained by detecting the indoor unit equipped with the filter mesh in the initial clean state. The first external static pressure value is the external static pressure value collected in the operation process of the indoor unit of the air conditioner; that is, the first external static pressure value is the detected external static pressure value after the filter mesh has been operated for a period of time. Thus, according to the first external static pressure value, whether there is an occurrence of filth blockage of the filter mesh may be determined according to the numerical relationship between the first external static pressure value and the preset external static pressure value, and the first resistance difference value.

In addition, according to the method for detecting the filter mesh of the indoor unit in the above-mentioned technical solution provided by the present application, the following additional technical features may also be included: In the aforesaid embodiment, the indoor unit further includes a draught fan, and the step of determining the first external static pressure value in the operation process of the indoor unit specifically includes: collecting an operating current value of the draught fan; and determining the first external static pressure value according to the preset air volume value and the operating current value.

In this arrangement, the indoor unit further includes the draught fan, and during the operation of the indoor unit at the constant air volume, current is transmitted to the draught fan, so that the draught fan is operated at a corresponding rotation speed, the air conditioner is enabled to output a constant air volume.

In particular, a correspondence curve of rotation speeds and preset currents is stored in a local memory area of the air conditioner, and the draught fan is controlled to be operated according to a rotation speed and a current in the correspondence curve. Thus, the control of constant air volume output of the indoor unit of the air conditioner is realized.

Before the air conditioner leaves the factory, the indoor unit of the air conditioner is tested under multiple external static pressure values, and in the testing process, the rotation speed of the draught fan is adjusted, in order that the air volume output by the indoor unit reaches the preset air volume value. The current value and the external static pressure value in the current operating mode of the draught fan of the indoor unit are recorded according to the correspondence relationship. Thus, a correspondence relationship of air volumes, current values and external static pressure values is stored in the local memory area of the air conditioner. When the indoor unit of the air conditioner is controlled to be operated at the preset air volume value, the operating current value of the draught fan is obtained. The corresponding first external static pressure value may be searched and determined through the operating current value and the preset air volume value according to the correspondence relationship pre-stored in the local memory area of the pre-existing air conditioner.

A correspondence relationship between air volumes and current values under various external static pressure values is stored before the air conditioner leaves the factory. In a controlling process of operation of the air conditioner, the first external static pressure value may be determined quickly by collecting the operating current value of the draught fan, and an accuracy of the obtained first external static pressure value is also improved.

In any one of the aforesaid embodiments, the step of determining the first external static pressure value according to the air volume value and the operating current value specifically includes: searching a first correspondence relationship between a current value and an external static pressure value according to the preset air volume value; determining a second external static pressure value according to the operating current value and the first correspondence relationship; obtaining a static pressure correction value, and calculating the first external static pressure value according to the second external static pressure value and the static pressure correction value.

In this arrangement, the indoor unit may be operated at different air volumes. In the determining process of the first external static pressure value, the first correspondence relationship between current values and corresponding external static pressure values needs to be found by looking up a table according to the preset air volume value, then, the corresponding second external static pressure value is searched according to the operating current value of the draught fan and the first correspondence relationship. Not only the resistance of the filter mesh is counted into the second external static pressure value, other structural components in the indoor unit may also generate resistance to the exhausted air, and the resistance to the exhausted air may also be counted as the second external static pressure value. Thus, after the second external static pressure value is obtained, the second external static pressure value is corrected according to the static pressure correction value, and the first external static pressure value corresponding to the preset air volume value is obtained.

In the present application, in the process of determination of the first external static pressure value corresponding to the preset air volume value, the searched second external static pressure value is corrected through the static pressure correction value. Thus, the obtained first static pressure value is only affected by the resistance value of the filter mesh, and it is ensured that the first external static pressure value and the preset external static pressure value can reflect the actual condition of filth blockage of the filter mesh.

In any one of the aforesaid embodiments, the indoor unit includes an air guide strip, the air guide strip is arranged at an air outlet of the indoor unit. The step of obtaining the static pressure correction value specifically includes: collecting an inclination angle of the air guide strip; and obtaining a second correspondence relationship between inclination angles and correction values, and searching the static pressure correction value according to the inclination angle and the second correspondence relationship.

In this arrangement, the indoor unit further includes the air guide strip, and the air guide strip is arranged at the position of the air outlet of the indoor unit, and is located at an outer side of the filter mesh. That is, in the operation process of the indoor unit, after the exhausted air passes through the filter mesh and is filtered, the direction of air outlet of the indoor unit may be changed when the exhausted air passes through the air guide strip. The indoor unit further includes a driving motor for driving the air guide strip, the driving motor is connected to a controller of the air conditioner. The user may control the driving motor to move through the controller, to enable the air guide strip to move to a specified angle, thereby adjusting the direction of the air outlet of the air conditioner.

The air guide strip may also generate a resistance to the exhausted air of the indoor unit, thereby affecting the determination of the static pressure value of the indoor unit. When the angles of the air guide strips are different, the resistances to the exhausted air of the indoor unit are also different. Before the indoor unit leaves the factory, resistance values generated by the air guide strip and the inclination angle of the air guide strip are stored according to a correspondence relationship. The resistance to the exhausted air of the indoor unit, which is generated by the air guide strip, is the static pressure correction value. According to the inclination angle of the air guide strip of the indoor unit, the corresponding resistance to the exhausted air of the indoor unit (i.e., the static pressure correction value), which is generated by the air guide strip, may be found through the second correspondence relationship. In order to eliminate the influence of the air guide strip on the external static pressure value, the resistance value to the exhausted air of the indoor unit, which is generated by the air guide strip, is used as the static pressure correction value, by calculating the second external static pressure value and the static pressure correction value, such that the obtained first static pressure value is only influenced by the resistance value of the filter mesh. Thus, the first external static pressure value and the preset external static pressure value may reflect the actual condition of filth blockage of the filter mesh accurately.

In any one of the aforesaid embodiments, before the step of collecting the operating current value of the draught fan, the method further includes: collecting a current air volume value output by the draught fan; and determining an air volume threshold range according to the preset air volume value, and determining that a condition of the current air volume value within the air volume threshold range reaches a preset time duration.

In this arrangement, it is necessary to determine that the air volume output by the draught fan reaches a preset value before collecting the operating current value, and the output air volume is kept in a stable state. Subtraction/addition operation is performed on the preset air volume value to obtain the air volume threshold range. It can be determined that the draught fan is operated at the preset air volume value at this time, if the air volume value output by the draught fan is in the air volume threshold range. The time duration of the condition of the current air volume value being within the air volume threshold range is counted, and it is determined that the draught fan is in a state of outputting air volume value stably, if the preset time duration is reached. In the present application, whether the draught fan reaches a constant output preset air volume value or not before the operating current value is collected is determined first, thus, the acquisition of the operating current value corresponding to the preset air volume value is realized. By recording the time duration of the current air volume value within the air volume threshold range that reaches the preset time duration, and then collecting the operating current value, it thus can be further ensured that the collected operating current value is the current value of the draught fan in the operation state of constant air volume, an accuracy of the external static pressure value obtained subsequently according to the operating current value is improved.

In any one of the aforesaid embodiments, the step of obtaining the first resistance difference value of the filter mesh operated at the preset air volume value specifically includes: obtaining a third correspondence relationship between an air volume value and a resistance difference value of the filter mesh; and searching the first resistance difference value according to the preset air volume value and the third correspondence relationship.

In this arrangement, the resistance to the exhausted air of the indoor unit, which is generated by the filter mesh, is a hardware characteristic of the filter mesh itself. That is, the initial resistance value of the filter mesh is a fixed value. Before the filter mesh leaves the factory, a durability of the filter mesh is detected to determine a final resistance value of the filter mesh. That is, when the filter mesh reaches the final resistance value, the user is recommended to replace the filter mesh.

Since the air volume output by the indoor unit is different, the influence of the resistance value of the filter mesh on the air output of the indoor unit is also different. Before the air conditioner leaves the factory, simulation operation of the indoor unit is performed at various air volume values, and the final resistance values of the filter mesh generated when the indoor unit is operated at the various air volume values are collected. Thus, the first resistance difference values of the filter mesh corresponding to the various air volume values are calculated, and the first resistance difference values and the various air volume values are stored according to the third correspondence. After the mounting of the air conditioner is completed, the determination of the air volume value being the preset air volume value output constantly during the operation of the indoor unit is performed, and the first resistance difference value corresponding to the preset air volume value is searched according to the third correspondence relationship.

In any one of the aforesaid embodiments, the step of determining the first resistance difference value according to the preset air volume value specifically includes: obtaining a second resistance difference value of the filter mesh; obtaining a rated air volume value of the indoor unit; and calculating the first resistance difference value according to the rated air volume value, the preset air volume value and the second resistance difference value.

In this arrangement, the resistance to the exhausted air of the indoor unit, which is generated by the filter mesh, is the hardware characteristic of the filter mesh itself, that is, the initial resistance value of the filter mesh is a fixed value. Before the filter mesh leaves the factory, the durability of the filter mesh is detected to determine the final resistance value of the filter mesh. That is, when the filter mesh reaches the final resistance value, the user is recommended to replace the filter mesh. A difference value between the initial resistance value and the final resistance value is calculated to obtain the second resistance difference value.

Since the air volume output by the indoor unit is different, the influence of the resistance value of the filter mesh on the air output of the indoor unit is also different. Before the indoor unit leaves the factory, the local memory area pre-stores a calculation formula being capable of calculating the first resistance difference value according to the second resistance difference value. In particular, the formula is expressed as:

$$D_1 = A \times D_2 \times (A_{Fn}/A_{F0})^2;$$

Where, $D_1$ represents the first resistance difference value, $D_2$ represents a second resistance difference value, A represents a coefficient, $A_{F0}$ represents a rated air volume value, $A_{FN}$ represents a preset air volume value.

In the present application, the obtained preset air volume value, and the rated air volume value and the second resistance difference value pre-stored in the local memory area are substituted into the aforesaid formula, and the first resistance difference value can be calculated. The coefficient A ranges from 0.8 to 1.2. The first resistance difference value calculated by the aforesaid formula is the resistance difference value of the filter mesh corresponding to the preset air volume value. Thus, the accuracy of the subsequent step of calculating according to the first resistance difference value is improved, the accuracy of determination of the dirty blockage situation of the filter mesh is improved, and the possibility of erroneous judgement is reduced accordingly.

In any one of the aforesaid embodiments, the step of obtaining the second resistance difference value specifically includes: obtaining a first preset resistance value and a second preset resistance value of the filter mesh; and calculating the second resistance difference value according to the first preset resistance value and the second preset resistance value.

In this arrangement, the first resistance value of the filter mesh is the initial resistance value of the filter mesh, and the resistance to the air flowing through the filter mesh, which is generated by the filter mesh, is the hardware characteristic of the filter mesh. The second preset resistance value is the final resistance value of the filter mesh, and the final resistance value of the filter mesh is obtained by detecting the durability of the filter mesh. The difference value between the initial resistance value and the final resistance value is calculated and the second resistance difference value may be obtained. The second resistance difference value is a hardware attribute of the filter mesh.

It can be understood that, since the second resistance difference value is a hardware attribute value of the filter mesh, the second resistance difference value can be thus directly labeled on the filter mesh or recorded on a packing description of the filter mesh. After the user replaces the filter mesh with a new filter mesh, the second resistance difference value is input into the indoor unit of the air conditioner through the controller. The indoor unit may calculate the first resistance difference value according to the formula in the pre-stored local memory area.

In any one of the aforesaid embodiments, the step of determining the dirty blockage situation of the filter mesh according to the numerical relationship between the first external static pressure value and the preset external static pressure value, and the first resistance difference value specifically includes: obtaining a static pressure difference value according to the first external static pressure value and the preset external static pressure value; and determining the dirty blockage situation of the filter mesh according to the numerical relationship between the first resistance difference value and the static pressure difference value.

In this arrangement, the difference value between the first external static pressure value and the preset external static pressure value is calculated to obtain the static pressure difference value. Since the first external static pressure value and the preset external static pressure value correspond to the preset air volume of the indoor unit, where the first external static pressure value is the external static pressure value collected when the indoor unit is operated at the preset air volume value under the current condition of the filter mesh, the preset external static pressure value is the external static pressure value collected when the indoor unit is operated at the preset air volume value before the indoor unit leaves the factory, that is, when the filter mesh is in the initial state. Thus, the static pressure difference value calculated according to the first external static pressure value and the preset external static pressure value is also corresponding to the preset air volume value. The calculated static pressure difference value may accurately reflect the actual condition of filth blockage of the filter mesh. Thus, the dirty blockage situation of the filter mesh may be accurately determined according to the first resistance difference value and the static pressure difference value of the filter mesh in the initial state.

It can be understood that, when the indoor unit is operated at different air volumes, the external static pressure differences are also different, a correspondence relationship between the first resistance difference value and the air volume of the indoor unit is established. The dirty blockage situation of the filter mesh under different air volumes is judged according to the first external static pressure value corresponding to the preset air volume value and the numerical relationship between the preset external static pressure value and the first resistance difference value, an accuracy of determination of whether there is an occurrence of filth blockage of the filter mesh may be improved.

In any one of the aforesaid embodiments, the step of determining the dirty blockage situation of the filter mesh according to the numerical relationship between the first resistance difference value and the static pressure difference value specifically includes: calculating a ratio of the static pressure difference value to the first resistance difference value; and determining that the filter mesh is in a filth blockage state when the ratio is greater than a preset value.

In this arrangement, the first resistance difference value is obtained by calculating the difference value between the initial resistance value and the final resistance value of the filter mesh, the first resistance difference value is a resistance variation value of the filter mesh from the initial clean state to the filth blockage state. The preset external static pressure value is the external static pressure value obtained by detecting the indoor unit equipped with the filter mesh in the initial clean state. The first external static pressure value is the external static pressure value collected in the operation process of the indoor unit of the air conditioner. That is, the first external static pressure value is the detected external static pressure value after the filter mesh has been operated for a period of time. A ratio of the static pressure difference value to the first resistance difference value is calculated and a specific ratio is obtained. The aforesaid ratio may reflect the level of filth blockage of the filter mesh. The preset value is preset according to the ratio. When the ratio reaches the preset value, it is considered that the filter mesh is in the filth blockage state, so that a detection regarding whether the filter mesh is in a filth blockage state is realized.

In any one of the above embodiments, the method for detecting the filter mesh of the indoor unit further includes: outputting first prompt information and/or sending second prompt information to a server on the basis that the filter mesh is in the filth blockage state.

In this arrangement, the air conditioner further includes a remote control, the remote control is provided with a first display unit, and the indoor unit is provided with a second display unit and a loudspeaker.

When detecting that the filter mesh is in the filth blockage state, the indoor unit displays the first prompt information through the first display unit and/or the second display unit on the remote control. The first prompt information includes text information and icon information. Thus, information indicating that the filter mesh is dirty and blocked is displayed to the user. The first prompt information may also be output in the form of audio through the loudspeaker in the indoor unit.

The indoor unit further includes a communication device, the indoor unit sends the second prompt information to the server through the communication device when detecting that the filter mesh is in the filth blockage state. The server is an after-sales platform of a manufacturer, the manufacturer may provide a corresponding value-added service according to the second prompt information, the user does not need to replace the filter mesh by himself/herself, so that user experience of the user is further improved.

According to the second aspect of the present application, an apparatus for detecting a filter mesh of an indoor unit is provided. The indoor unit includes a filter mesh, and the filter mesh is disposed at a return air inlet of the indoor unit. The apparatus for detecting the filter mesh of the indoor unit includes: an acquisition module configured to acquire a first resistance difference value of the filter mesh under a preset air volume value; a first determination module configured to determine a first external static pressure value in an operation process of the indoor unit; a second determination module configured to determine a dirty blockage situation of the filter mesh according to a numerical relationship between the first external static pressure value and a preset external static pressure value, and the first resistance difference value.

The apparatus for detecting the filter mesh of the indoor unit provided in the present application may detect whether there is an occurrence of filth blockage in the filter mesh of the indoor unit. When the indoor unit is in operation, air before heat exchange enters the indoor unit through the return air inlet of the indoor unit. The filter mesh of the indoor unit is arranged at the return air inlet and is configured to filter the air passing through the return air inlet so as to achieve an air purification effect.

The apparatus for detecting the filter mesh of the indoor unit includes the acquisition module, the determination modules, a calculation module, and a judgement module.

The filter mesh has an initial resistance value and a final resistance value. The initial resistance value is the resistance value of the filter mesh after leaving the factory, that is, the resistance value of the filter mesh in an initial clean state, the final resistance value is the resistance value of the filter mesh when the filter mesh needs to be cleaned or replaced. The resistance difference value may be obtained by calculating the difference value between the final resistance value and the initial resistance value. In the event that the air conditioner is operated at different air volumes, the resistance difference value of the filter mesh is also different. When the indoor unit is controlled to be operated at the preset air volume, the first resistance difference value corresponding to the preset air volume may be obtained. When the indoor unit is in an operation state, the first external static pressure value of the indoor unit may be determined. The first external static pressure value is the external static pressure value of the indoor unit during the operation of the indoor unit under the current hardware condition of the indoor unit. The preset external static pressure value is a pre-stored external static pressure value corresponding to the preset air volume value, and the external static pressure value is preset. Where, the preset external static pressure value is collected after mounting of the air conditioner is completed. That is, the external static pressure value collected by the filter mesh during operation of a new air conditioner is the preset external static pressure value. The dirty blockage situation of the filter may be determined according to the numerical relationship between the first external static pressure value and the preset external static pressure value, and the first resistance difference value.

It can be understood that, the external static pressure value collected during the operation of the air conditioner may be changed with the filth blockage of the filter mesh. Thus, the dirty blockage situation of the filter mesh can be determined according to the numerical relationship between the first external static pressure value and the preset external static pressure value, and the first resistance difference value.

In the present application, the dirty blockage situation of the filter mesh is detected through the first resistance difference value of the filter mesh and the static pressure difference value of the air conditioner, the dirty blockage situation of the filter mesh can be determined in time in the operation process of the air conditioner, an accuracy and an instantaneity of determination of the dirty blockage situation of the filter mesh are improved as compared to the related art.

It is worth noting that, the resistance difference value is obtained by calculating the difference value between the initial resistance value and the final resistance value of the filter mesh, the resistance difference value is the resistance change value of the filter mesh from the initial clean state to the filth blockage state. The first resistance difference value is related to the air volume of the current indoor unit in operation. The first resistance difference value of the filter mesh is determined according to the air volume of the indoor unit in operation. The preset external static pressure value is the external static pressure value obtained by detecting the indoor unit equipped with the filter mesh in the initial clean state. The first external static pressure value is the external static pressure value collected in the operation process of the indoor unit of the air conditioner; That is, the first external static pressure value is the detected external static pressure value after the filter mesh has been operated for a period of time. Thus, according to the first external static pressure value, whether there is an occurrence of filth blockage of the filter mesh may be determined according to the numerical relationship between the first external static pressure value and the preset external static pressure value, and the first resistance difference value.

It can be understood that, when the indoor unit is operated at different air volumes, the external static pressure differences may also be variable. A correspondence relationship between first resistance difference values and operating air volumes of the indoor unit is established. The accuracy of determination of whether the filter mesh is in the filth blockage state may be improved by comparing the calculated first external static pressure difference value with the first resistance difference value corresponding to the preset air volume under different air volumes.

According to third aspect of the present application, an indoor unit is provided. The indoor unit includes: a housing and a filter mesh disposed in an air duct.

The housing is provided with the air duct, and the filter mesh is disposed in the air duct.

A memory, which stores a program or an instruction; a processor, the processor is configured to execute the program or instruction stored in the memory to implement the steps of the method for detecting the filter mesh of the indoor unit in the first aspect. Thus, all beneficial effects of the method for detecting the filter mesh of the indoor unit in any possible arrangement of the first aspect are not repeated described here.

The indoor unit provided in the present application includes the housing and the filter mesh, the air duct is formed in the housing. The indoor unit further includes a return air inlet. When the indoor unit is in operation, air before heat exchange enters the air duct through the return air inlet, the filter mesh is arranged in the air duct, air flowing through the air duct is filtered by the filter mesh, and thus an air purification effect is achieved.

In addition, according to the indoor unit in the above technical solution provided in the present application, the indoor unit may further have the following additional technical features:

In any one of the above embodiments, the indoor unit further includes an air guide strip and a driving motor, the air guide strip is disposed at an air outlet of the air duct, an output of the driving motor is connected to the air guide strip, in order to drive the air guide strip to adjust an inclination angle.

In this arrangement, the indoor unit further includes the air guide strip and the driving motor. The air guide strip is arranged at the air outlet of the air duct and is located on an outer side of the filter mesh. That is, in the operating process of the indoor unit, after the discharged control is filtered through filter mesh, an air outlet direction of the indoor unit may be changed through the air guide strip. The driving motor is connected to a controller of the air conditioner, the user may control the driving motor to move through the controller to enable the air guide strip to rotate to form a specified angle, thereby adjusting the air outlet direction of the air conditioner

In any one of the aforesaid embodiments, the indoor unit further includes a display device connected to the processor and configured to output first prompt information; and/or a communication device connected to the processor and configured to send second prompt information to a server.

In this arrangement, the indoor unit further includes the display device and/or the communication device. The display device and/or the communication device are connected to the processor of the indoor unit. When detecting that the filter mesh of the indoor unit is in the filth blockage state, the display device may display and output the first prompt information. By outputting the first prompt information by the display device, the user can be prompted that the filter mesh is in the filth blockage state currently, and the filter mesh needs to be replaced or cleaned. The communication device may send the second prompt information to the server, the manufacturer may read the second prompt information in the server, and provide a corresponding value-added server according to the second prompt information, thus, the user does not need to replace the filter mesh by himself/herself, the user experience of the user is improved.

In some embodiments, the air conditioner further includes a remote control, the remote control is provided with a first display unit, and the indoor unit is provided with a second display unit and a loudspeaker.

When detecting that the filter mesh is the filth blockage state, the indoor unit displays the first prompt information through the first display unit and/or the second display unit on the remote control, the first prompt information includes text information and icon information. Thus, displaying the information indicating that the filter mesh is dirty and blocked to the user is realized. The first prompt information may also be output in the form of audio through the loudspeaker in the indoor unit.

In some embodiments, when the indoor unit is powered on each time, the first prompt information is output in the form of audio through the loudspeaker, thereby avoiding the user from ignoring the first prompt information.

In some embodiments, the level of filth blockage of the filter mesh includes: "excellent", "normal filth blockage" and "serious filth blockage". Different levels of filth blockage correspond to different first prompt information, thus, the user can get to know the current filth blockage level of the filter mesh of the indoor unit more clearly.

According to the fourth aspect of the present application, an air conditioner is provided. The air conditioner includes an indoor unit and an outdoor unit.

The outdoor unit is connected to the indoor unit, a compressor is further provided in the outdoor unit. The compressor may compress a refrigerant, and the compressed refrigerant flows through the indoor unit through a refrigerant pipeline, thereby achieving the functions of refrigeration and heating of the air conditioner.

The indoor unit is selected as the indoor unit in any possible arrangement of the third aspect, and thus possesses all of the beneficial effects of the indoor unit in any one of the possible arrangements of the third aspect, which are not repeatedly described herein.

According to the fifth aspect of the present application, a readable storage medium is provided, the readable storage medium stores a program or an instruction. When the program or the instruction is executed by the processor, the steps of the method for detecting the filter mesh of the indoor unit in any one of the aforesaid possible arrangements are implemented. Thus, the storage medium has all of the beneficial technical effects of the method for detecting the filter mesh of the indoor unit in any possible arrangement, which are not repeatedly described herein.

Additional aspects and advantages of the present application will become apparent in the following descriptions, or be understood through the implementation of the present application.

DESCRIPTION OF THE DRAWINGS

The aforesaid and/or additional aspects and advantages of the present application will become apparent and more understandable in the following description of embodiments with reference to the drawings. Where:

FIG. 1 illustrates a first schematic flow diagram of a method for detecting a filter mesh of an indoor unit according to the first embodiment of the present application;

FIG. 2 illustrates a second schematic flow diagram of the method for detecting the filter mesh of the indoor unit according to the first embodiment of the present application;

FIG. 3 illustrates a third schematic flow diagram of the method for detecting the filter mesh of the indoor unit according to the first embodiment of the present application;

FIG. 4 illustrates a fourth schematic flow diagram of the method for detecting the filter mesh of the indoor unit according to the first embodiment of the present application;

FIG. 5 illustrates a fifth schematic flow diagram of the method for detecting the filter mesh of the indoor unit according to the first embodiment of the present application;

FIG. 6 illustrates a sixth schematic flow diagram of the method for detecting the filter mesh of the indoor unit according to the first embodiment of the present application;

FIG. 7 illustrates a seventh schematic flow diagram of the method for detecting the filter mesh of the indoor unit according to the first embodiment of the present application;

FIG. 8 illustrates an eighth schematic flow diagram of the method for detecting the filter mesh of the indoor unit according to the first embodiment of the present application;

FIG. 9 illustrates a ninth schematic flow diagram of the method for detecting the filter mesh of the indoor unit according to the first embodiment of the present application;

FIG. 10 illustrates a tenth schematic flow diagram of the method for detecting the filter mesh of the indoor unit according to the first embodiment of the present application;

FIG. 11 illustrates a schematic block diagram of an apparatus for detecting a filter mesh of an indoor unit according to the second embodiment of the present application;

FIG. 12 illustrates a schematic block diagram of an indoor unit according to the third embodiment of the present application;

FIG. 13 illustrates a schematic block diagram of an air conditioner according to the fourth embodiment of the present application.

DETAILED DESCRIPTIOIN OF EMBODIMENTS

In order to understand the objective, the features and the beneficial effects of the present application more clearly, the present is further described in detail below with reference to the accompanying figures and the detailed description of embodiments. It is worth noting that, the various embodiments and the features in the various embodiments can be combined mutually without confliction.

Many details have been illustrated in the following description in order to facilitate a comprehensive understanding of the present application. However, the present application may also be implemented in other manners different from the manners described herein. Thus, the protection scope of the present application is not limited to the embodiments disclosed hereinafter.

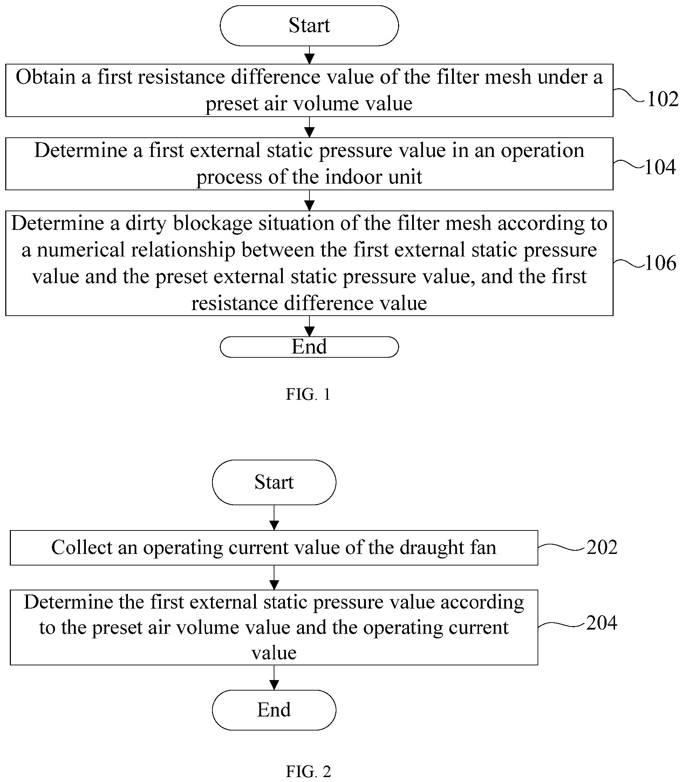

A method for detecting a filter mesh of an indoor unit, an apparatus for detecting a filter mesh of an indoor unit, an indoor unit, an air conditioner, and a readable storage medium according to some embodiments of the present application are described below with reference to FIGS. 1-13.

First embodiment:

As shown in FIG. 1, the method for detecting the filter mesh of the indoor unit is provided in the first embodiment of the present application. This method specifically includes:

At a step 102, a first resistance difference value of the filter mesh at a preset air volume value.
At a step 104, a first external static pressure value during operation of the indoor unit is obtained.
At a step 106, a dirty blockage situation of the filter mesh is determined according to a numerical relationship between the first external static pressure value and a preset external static pressure value, and the first resistance difference value.

The method for detecting the filter mesh of the indoor unit provided in this embodiment may detect whether there is an occurrence of filth blockage in the filter mesh of the indoor unit. When the indoor unit is in operation, air before heat exchange enters the indoor unit through a return air inlet of the indoor unit, the filter mesh of the indoor unit is arranged at the return air inlet and is used for filtering the air passing through the return air inlet, thereby achieving an air purification effect. The filter mesh has an initial resistance value and a final resistance value. The initial resistance value is the resistance value of the filter mesh after leaving the factory, that is, the initial resistance value is the resistance value of the filter mesh in an initial clean state. The final resistance value is the resistance value of the filter mesh that needs to be cleaned or replaced. The resistance difference value may be obtained by calculating the difference value between the final resistance value and the initial resistance value. When the air conditioner is operated at different air volumes, the resistance difference value of the filter mesh is also different. When the indoor unit is controlled to be operated at the preset air volume, the first resistance difference value corresponding to the preset air volume is obtained. The first external static pressure value of the indoor unit in the current operating state is determined. The first external static pressure value is an external static pressure value under the current hardware condition of the indoor unit, when the indoor unit is operated at the present air volume value. The preset external static pressure value is a pre-stored external static pressure value corresponding to the preset air volume value, and the external static pressure value is preset. The preset external static pressure value is acquired after installation of the air conditioner has been completed. That is, the external static pressure value collected by the filter mesh in the initial state during the operation of the air conditioner is the preset external static pressure value. The dirty blockage situation of the filter may be determined according to the numerical relationship between the first external static pressure value and the preset external static pressure value, and the first resistance difference value.

It can be understood that, the external static pressure value collected during the operation of the air conditioner may be changed with the filth blockage of the filter mesh. Thus, the dirty blockage situation of the filter mesh may be judged according to the numerical relationship between the first external static pressure value and the preset external static pressure value, and the first resistance difference value.

It is worth noting that, the resistance difference value is obtained by calculating the difference value between the initial resistance value and the final resistance value of the filter mesh, the resistance difference value is the resistance change value of the filter mesh from an initial clean state to a filth blockage state. The first resistance difference value is related to the operating air volume of the current indoor unit, the first resistance difference value of the filter mesh is determined according to the operating air volume of the indoor unit. The preset external static pressure value is the external static pressure value obtained by detecting the indoor unit equipped with the filter mesh in the initial clean state.

The first external static pressure value is the external static pressure value collected during the operation process of the indoor unit of the air conditioner. That is, the first external static pressure value is the detected external static pressure value after the filter mesh has been operated for a period of time. Thus, whether the filter mesh is dirty and blocked may be judged according to the numerical relationship between the external static pressure value and the preset external static pressure value, and the first resistance difference value.

In the aforesaid embodiment, a draught fan is further provided in the indoor unit.

In this embodiment, the indoor unit further includes the draught fan, during the operation of the indoor unit at a constant air volume, current flows through the draught fan, such that the draught fan is operated at a corresponding rotation speed, thereby causing the air conditioner to output the constant air volume.

In particular, a corresponding curve of rotation speeds and preset currents is stored in a local memory area of the air conditioner. The draught fan is controlled to be operated according to one rotation speed and one current in the corresponding curve, in order to realize the control of constant air volume output of the indoor unit of the air conditioner.

As shown in FIG. 2, in any one of the aforesaid embodiments, the step of determining the first external static pressure value of the indoor unit in the method for detecting the filter mesh specifically includes:
At a step 202, an operating current value of the draught fan in the indoor unit is collected.

At a step 204, the first external static pressure value is obtained according to the operating current value and the preset air volume value when the indoor unit is in operation.

In this embodiment, before the air conditioner leaves the factory, the indoor unit of the air conditioner is tested under various external static pressure values. In the testing process, the rotation speed of the draught fan is adjusted to enable the air volume output by the indoor unit reaches the preset air volume value. The current value and the external static pressure value of the draught fan of the indoor unit in the current operating mode are recorded in the form of correspondence relationship. Thus, a correspondence relationship of air volumes, current values and external static pressure values is stored in the local memory area of the air conditioner.

The operating current value of the draught fan is obtained when the indoor unit of the air conditioner is controlled to be operated at the preset air volume value. The corresponding first external static pressure value may be searched and determined through the operating current value and the preset air volume value, according to the correspondence relationship pre-stored in the local memory area of the air conditioner The correspondence relationship between air volumes and current values under the various external static pressure values is stored before the air conditioner leaves the factory. The first external static pressure value may be quickly determined by collecting the operating current value of the draught fan during the control of the operation process of the air conditioner, and an accuracy of the obtained first external static pressure value is also improved.

In some embodiments, the correspondence relationship of air volume values, current values of the draught fan and the external static pressure values is stored in the local memory area of the air conditioner in a form of table.

In these embodiments, the corresponding external static pressure value is found by looking up the table according to the operating current value and the preset air volume value, during the operation of the air conditioner.

In some other embodiments, the correspondence relationship between air volume values, current values of the draught fan and the external static pressure values is stored in the local memory area of the air conditioner in a form of functions.

In these embodiments, the operating current value and the preset air volume value is obtained during the operation of the air conditioner. The operating current value and the preset air volume value are calculated through the preset function to obtain the external static pressure value.

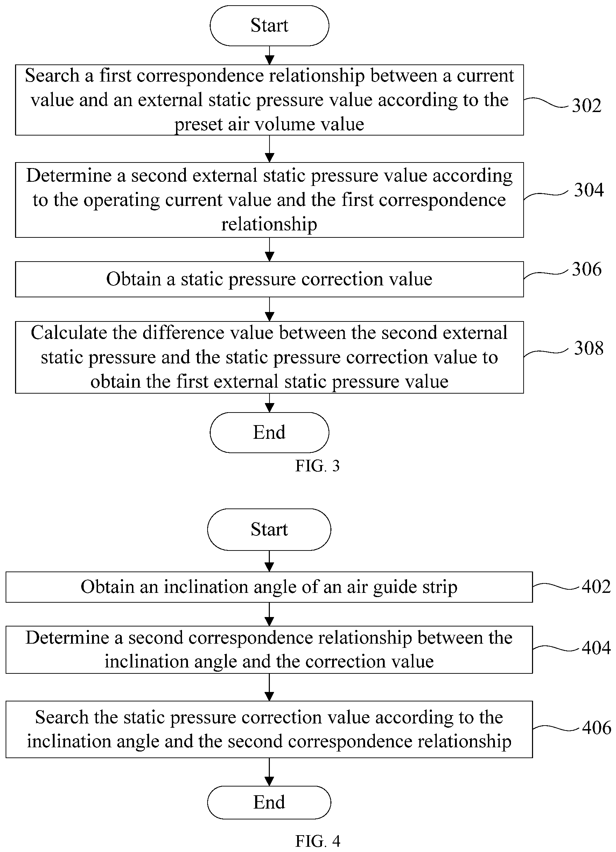

As shown in FIG. 3, the step of obtaining the first external static pressure value according to the operating current value and the preset air volume value during the operation of the indoor unit in the method for detecting the filter mesh specifically includes:

At a step 302, the first correspondence relationship between the current value and the external static pressure value is found through the preset air volume value.

At a step 304, the second external static pressure value is determined according to the operating current value through the first correspondence relationship.

At a step 306, a static pressure correction value is obtained.

At a step 308, a difference value between the second external static pressure value and the static pressure correction value is calculated to obtain the first external static pressure value.

In this embodiment, the indoor unit may be operated with different air volume values. In the process of determination of the first external static pressure value, the first correspondence relationship between the corresponding external static pressure value and the current value needs to be searched by looking up the table according to the preset air volume value, then, the corresponding second external static pressure value is searched according to the operating current value of the draught fan and the first correspondence relationship. Not only the resistance force of the filter mesh is counted into the second external static pressure value, other structural components in the indoor unit may also generate resistance force to the air outlet, and this resistance force is also counted into the second external static pressure value. Thus, after the second external static pressure value is obtained, the second external static pressure value is corrected according to the static pressure correction value to obtain the first external static pressure value corresponding to the preset air volume value.

In the present application, in the process of determination of the first external static pressure value corresponding to the preset air volume value, the searched second external static pressure value is corrected through the static pressure correction value. Thus, the obtained first static pressure value is only influenced by the resistance value of the filter mesh, and it is ensured that the first external static pressure value and the preset external static pressure value may reflect the actual condition of filth blockage of the filter mesh.

In some embodiments, the external static pressure values, the air volume values, and the current values are stored in the local memory area of the indoor unit in the form of table, reference can be made to table 1 for the details.

Table 1

| External static pressure value | 0 | P1 | P2 | P3 | P4 |
|---|---|---|---|---|---|
| Current under the first air volume | $I_{L0}$ | $I_{L1}$ | $I_{L2}$ | $I_{L3}$ | $I_{L4}$ |
| Current under | $I_{M0}$ | $I_{M1}$ | $I_{M2}$ | $I_{M3}$ | $I_{M4}$ |
| the second air volume | | | | | |

In one specific embodiment, it is detected that the preset air volume value of the air conditioner is the first air volume, and the operating current value of the draught fan is determined as $I_{L2}$, and the second external static pressure value P2 may be obtained by looking up the table.

In another specific embodiment, when detecting that the preset air volume value of the air conditioner is the first air volume and the operating current value of the draught fan is determined to be between $I_{L2}$ and $I_{L3}$. Then, it can be determined that the external static pressure value is between P2 and P3, the second external static pressure value corresponding to the preset air volume value is obtained by performing an interpolation calculation on P2 and P3.

In any one of the aforesaid embodiments, the indoor unit further includes an air guide strip and a driving motor, and the air guide strip is connected to an output of the driving motor.

The indoor unit further includes an air guide strip, the air guide strip is arranged at an air outlet of the indoor unit and is located on an outer side of the filter mesh. That is, in the operating process of the indoor unit, after the discharged air is filtered through the filter mesh, an air outlet direction of the indoor unit may be changed through the air guide strip. The indoor unit further includes a driving motor for driving the air guide strip. The driving motor is connected to a controller of the air conditioner, and the user may control the driving motor to move through the controller to enable the air guide strip to rotate to form a specified angle, thereby adjusting the air outlet direction of the air conditioner.

As shown in FIG. 4, in any one of the aforesaid embodiments, the step of obtaining the static pressure correction value in the method for detecting the filter mesh specifically includes:

At a step 402, an inclination angle of the air guide strip is obtained.

At a step 404, a second correspondence relationship between inclination angles and correction values is determined.

At a step 406, the corresponding static pressure correction value is obtained according to the inclination angle through the second correspondence relationship.

In this embodiment, the air guide strip may also generate resistance to the air outlet of the indoor unit, thereby affecting the determination of the external static pressure value of the indoor unit. When the angles of the air guide strips are different, the resistance to the air output of the indoor unit is also different. Before the indoor unit leaves the factory, the resistance values generated by the air guide strip and the inclination angles of the air guide strip are stored according to a correspondence relationship. The resistance to the air outlet of the indoor unit, which is generated by the air guide strip, is the static pressure correction value. According to the inclination angle of the air guide strip of the indoor unit, the corresponding resistance (i.e., the static pressure correction value) to the air outlet of the indoor unit, which is generated by air guide strip, may be determined through the second correspondence relationship. In the present application, in order to avoid the impact of the air guide strip on the external static pressure value, the resistance value to the air outlet of the indoor unit, which is generated by the air guide strip, is taken as the static pressure correction value, calculation is performed on the second external static pressure value and the static pressure correction value, such that the obtained first static pressure value is only influenced by the resistance value of the filter mesh, the first external static pressure value and the preset external static pressure value can accurately reflect the actual condition of filth blockage of the filter mesh.

In some embodiments, the inclination angle of the air guide strip is determined by collecting a rotation angle of the driving motor.

In some other embodiments, a sensor is provided on the air guide strip or on the output shaft of the driving motor, the sensor is connected to the processor of the indoor unit, and the sensor may directly collect the inclination angle of the air guide strip.

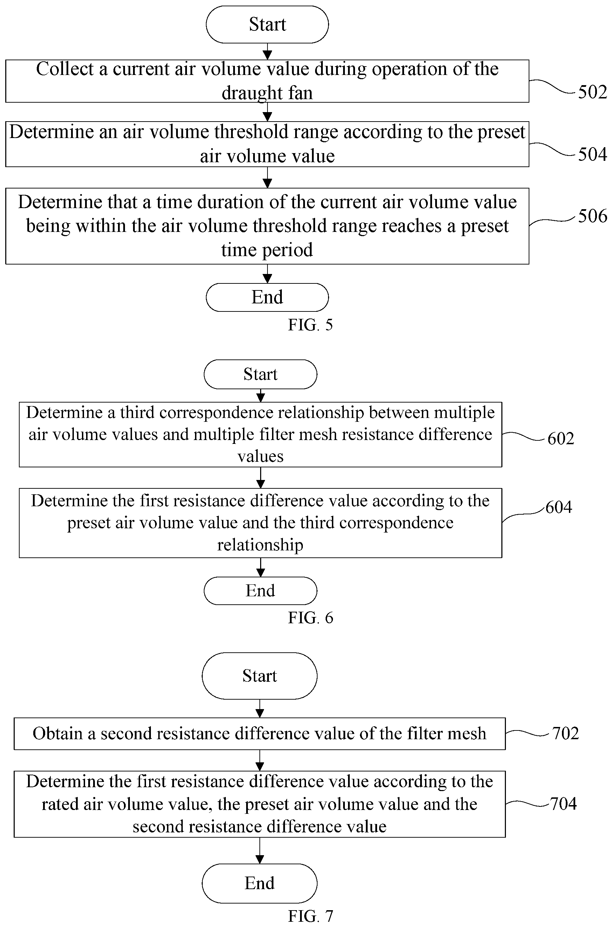

As shown in FIG. 5, in any one of the aforesaid embodiments, before the step of collecting the operating current value of the draught fan in the method for detecting the indoor unit of the filter mesh, the method further includes:

At a step 502, the current air volume value is collected during the operation of the draught fan.

At a step 504, a corresponding air volume threshold range is searched according to the preset air volume value;

At a step 506, a time duration of a condition of the current air volume value within the air volume threshold range reaches a preset time duration is determined.

In this embodiment, before the operating current value is collected, it is necessary to determine that the air volume output by the draught fan reaches a preset value, and the output air volume is kept in a stable state. A subtraction operation is performed on the preset air volume value to obtain the air volume threshold range. When the air volume value output by the draught fan is in the air volume threshold range, it may be determined that the draught fan is operated at the preset air volume value at this time. The time duration of the current air volume value within the air volume threshold range is counted, when the time duration reaches the preset time length, it is determined that the draught fan is in a state of outputting air volume value stably. In the present application, before the operating current value is collected, whether the draught fan outputs the preset air volume value constantly is determined firstly, thus, the operating current value corresponding to the preset air volume value is collected. By recording the time duration of the current air volume value within the air volume threshold range and lasting for the preset time length, and then collecting the operating current value, it can be ensured that the collected operating current value is the current value of the draught fan in the operation state of constant air volume, and the accuracy of the external static pressure value obtained subsequently according to the operating current value is improved.

As shown in FIG. 6, in any one of the aforesaid embodiments, the step of determining the corresponding first resistance difference value according to the preset air volume value in the method for detecting the filter mesh specifically includes:

At a step 602, a third correspondence relationship between an air volume value and a resistance difference value of the filter mesh is determined.

At a step 604, the corresponding first resistance difference value is searched through the preset air volume value, according to the third correspondence relationship.

In this embodiment, the resistance to the air outlet of indoor unit, which is generated by the filter mesh, is a hardware characteristic of the filter mesh itself. That is, the initial resistance value of the filter mesh is a fixed value. Before the filter mesh leaves the factory, a durability of the filter mesh is detected and the final resistance value of the filter mesh is determined. That is, when the filter mesh reaches the final resistance value, the user is recommended to replace the filter mesh.

Due to the fact that the air volume output by the indoor unit is different, the impact of the resistance value of the filter mesh on the air output of the indoor unit is also different. Before the air conditioner leaves the factory, simulation operation of the indoor unit is performed at various air volume values. The final resistance values of the filter mesh are collected when the indoor unit is operated at various air volume values, and the first resistance difference values of the filter mesh corresponding to the various air volume values are obtained by calculation, and the first resistance difference values and the various air volume values are stored according to a third correspondence relationship. After the mounting of the air conditioner is completed, it is determined that the air volume value is the preset air volume value output constantly during the operation of the indoor unit, and the first resistance difference value corresponding to the preset air volume value is searched according to the third correspondence relationship.

As shown in FIG. 7, in any one of the aforesaid embodiments, the step of obtaining the first resistance difference value corresponding to the preset air volume value in the method for determining the filter mesh specifically includes:
At a step 702, a second resistance difference value of the filter mesh and a rated air volume value of the indoor unit are obtained.

At a step 704, the first resistance difference value is calculated according to the rated air volume value, the preset air volume value, and the second resistance difference value.

In this embodiment, the resistance to the air outlet of indoor unit, which is generated by the filter mesh, is a hardware characteristic of the filter mesh itself. That is, the initial resistance value of the filter mesh is a fixed value. Before the filter mesh leaves the factory, the durability of the filter mesh is detected, the final resistance value of the filter mesh is determined, that is, when the filter mesh reaches the final resistance value, the user is recommended to replace the filter mesh. The difference value between the initial resistance value and the final resistance value is calculated to obtain the second resistance difference value.

Due to the fact that air volume outputs by the indoor unit are different, the impacts of the resistance values of the filter mesh on the air output of the indoor unit are also different. Before the indoor unit leaves the factory, a calculation formula capable of calculating the first resistance difference value according to the second resistance difference value is pre-stored in the local memory area. This formula is specifically expressed below:

$$D_1 = A \times D_2 \times (A_{Fn}/A_{F0})^2;$$

Where, $D_1$ is the first resistance difference value, $D_2$ is the second resistance difference value, A is a coefficient, $A_{F0}$ is the rated air volume value, and $A_{FN}$ is the preset air volume value.

In the present application, the obtained preset air volume value, the rated air volume value and the second resistance difference value stored in the local memory area are substituted into the aforesaid formula, the first resistance difference value may be calculated. Where, a value range of the coefficient A is between 0.8 and 1.2. The first resistance difference calculated through the formula is the resistance difference value of the filter corresponding to the preset air volume value. Thus, an accuracy of the subsequent calculation step according to the first resistance difference value is improved, the accuracy of determination of the dirty blockage situation of the filter mesh is improved accordingly, and a possibility of erroneous judgement is reduced.

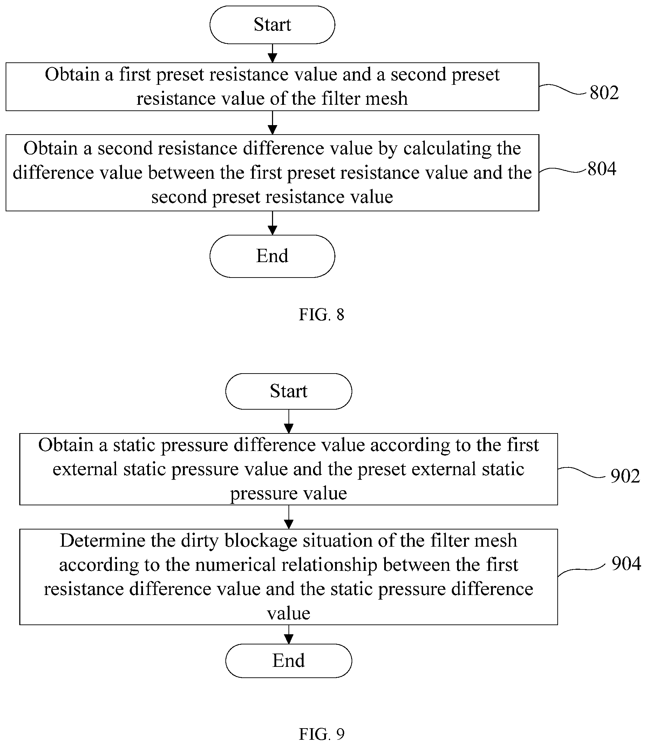

As shown in FIG. 8, in any one of the aforesaid embodiments, the step of obtaining the second resistance difference value of the filter mesh in the method for detecting the filter mesh specifically includes:
At a step 802, a first preset resistance value and a second preset resistance value of the filter mesh are obtained.

At a step 804, a difference value between the first preset resistance value and the second preset resistance value is calculated to obtain the second resistance difference value.

In this embodiment, the first resistance value of the filter mesh is the initial resistance value of the filter mesh, the resistance to the air passing through the filter mesh is the hardware characteristic of the filter mesh itself. The second preset resistance value is the final resistance value of the filter mesh, and the final resistance value of the filter mesh is obtained by detecting the durability of the filter mesh. The difference value between the initial resistance value and the final resistance value is calculated to obtain the second resistance difference value. The second resistance difference value is the hardware attribute of the filter mesh.

It can be understood that, since the second resistance difference value is the hardware attribute value of the filter mesh, thus, the second resistance difference value is directly labeled on the filter mesh or recorded on a packing description of the filter mesh. After the user replaces a new filter mesh, the second resistance difference is input into the indoor unit of the air conditioner through the controller. The indoor unit can calculate the first resistance difference value according to the formula pre-stored in the local memory area.

As shown in FIG. 9, in any one of the aforesaid embodiments, the step of determining the dirty blockage situation of the filter mesh according to the numerical relationship between the first external static pressure value and the preset external static pressure value, and the first resistance difference value specifically includes:
At a step 902, a static pressure difference value is obtained according to the first external static pressure value and the preset external static pressure value.

At a step 904, the dirty blockage situation of the filter mesh is determined according to a numerical relationship between the first resistance difference value and the static pressure difference value.

In this embodiment, the difference value between the first external static pressure value and the preset external static pressure value is calculated to obtain the static pressure difference value. Since the first external static pressure value and the preset external static pressure value correspond to the preset air volume value of the indoor unit, where the first external static pressure value is the external static pressure value collected when the indoor unit is operated at the preset air volume value, and the preset external static pressure value is the external static pressure value collected under the current state of the filter mesh when the indoor unit is operated at the preset air volume value, before the indoor unit leaves the factory (i.e., the filter mesh is in the initial state). Thus, the static pressure difference value calculated by calculating the difference value between the first external static pressure value and the preset external static pressure value is also corresponding to the preset air volume value. The calculated static pressure difference value may reflect the actual condition of filth blockage of the filter mesh accurately. Thus, the dirty blockage situation of the filter mesh may be accurately judged according to the first resistance difference value of the filter mesh in the initial state and the static pressure difference value.

The dirty blockage situation of the filter mesh is detected through the first resistance difference value of the filter mesh and the static pressure difference value of the air conditioner, the dirty blockage situation of the filter mesh may be determined in time in the operation process of the air conditioner Compared with the prior art, the accuracy and an instantaneity of determination of the dirty blockage situation of the filter mesh are improved.

It can be understood that, when the indoor unit is operated at different air volumes, the external static pressure difference values are also different, a correspondence relationship between the first resistance differences and the operating air volumes of the indoor unit is established, the dirty blockage situation of the filter mesh is judged according to the numerical relationship between the first external static pressure value corresponding to the preset air volume value and the preset external static pressure value, and the first resistance difference value under different air volumes. Thus, the accuracy of determination of whether the filter mesh is in the filth blockage state can be improved.

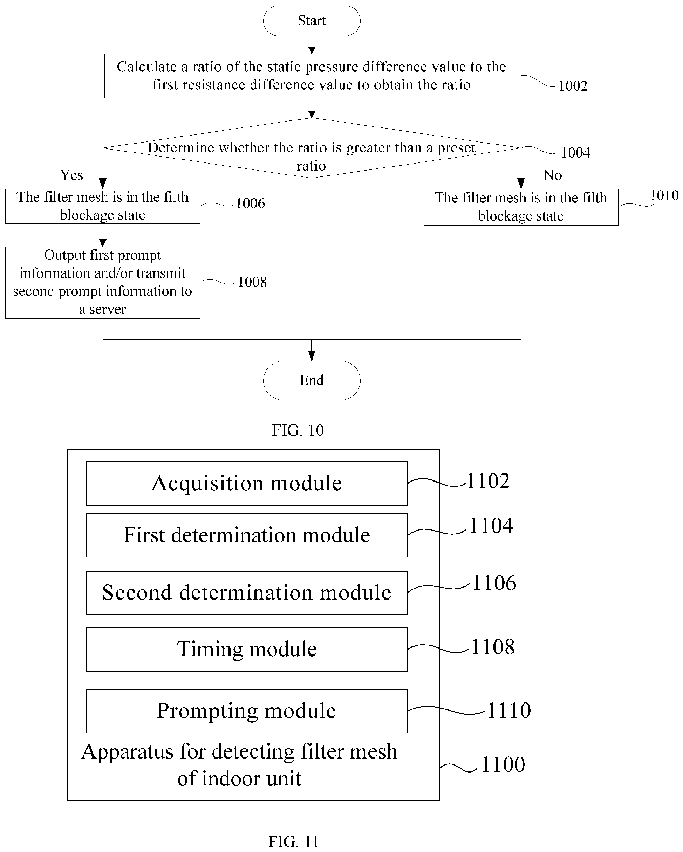

As shown in FIG. 10, in any one of the aforesaid embodiments, the step of determining the dirty blockage situation of the filter mesh according to the numerical relationship between the first resistance difference value and the static pressure difference value specifically includes:

At a step 1002, a ratio of the static pressure difference value to the first resistance difference value is calculated, and the ratio is obtained.

At a step 1004, whether the ratio is greater than a preset value is judged. If the determination result is yes, a step 1006 is performed; if the determination result is negative, a step 1010 is performed.

At the step 1006, the filter mesh is in the filth blockage state.

At the step 1008, first prompt information is output, and/or second prompt information is sent to a server.

At a step 1010, the filter mesh is not in the filth blockage state.

In this embodiment, the first resistance difference value is obtained by calculating the difference value between the initial resistance value and the final resistance value of the filter mesh, and the first resistance difference value is the resistance change value of the filter mesh from the initial clean state to the filth blockage state. The preset external static pressure value is the external static pressure value obtained by detecting the indoor unit equipped with the filter mesh in the initial clean state. The first external static pressure value is the external static pressure value collected during the operation process of the indoor unit of the air conditioner, that is, the first external static pressure value is the detected external static pressure value after the filter mesh has been operated for a period of time. A ratio of the static pressure difference value to the first resistance difference value is calculated to obtain a specific ratio. This ratio may reflect the level of filth blockage of the filter mesh. By presetting the preset value for the ratio, when the ratio reaches the preset value, it is considered that the filter mesh is in the filth blockage state. Thus, a detection regarding whether the filter mesh is in the filth blockage state is realized.

In some embodiments, preset values corresponding to different levels of filth blockage of the root filter is arranged according to the level of filth blockage of the filter mesh.

In these embodiments, the level of filth blockage includes "excellent", "ordinary filth blockage", and "serious filth blockage". Set values corresponding to the different levels of filth blockage are set, "good" corresponds to a set value less than the first preset value, "ordinary filth blockage" corresponds to a set value being greater than the first preset value, and "serious filth blockage" corresponds to a set value being greater than the second preset value. Where, the first preset value is less than the second preset value. When the calculated ratio is less than the first preset value, the level of filth blockage is determined as "excellent". When the calculated ratio is greater than the first preset value and less than the second preset value, the level of filth blockage level is determined as "ordinary filth blockage". When the calculated ratio is greater than the second preset value, the level of filth blockage determined as "serious filth blockage".

In some embodiments, the air conditioner further includes a remote control, the remote control is provided with a first display unit, and the indoor unit is provided with a second display unit and a loudspeaker.

When the indoor unit detects that the filter mesh is in the filth blockage state, the indoor unit displays the first prompt information through the first display unit and/or the second display unit on the remote control. The first prompt information includes text information and icon information. Thus, displaying the information indicating that the filter mesh is dirty and blocked to the user is realized. The first prompt information may also be output in the form of audio through the loudspeaker in the indoor unit.

The indoor unit further includes a communication device, the indoor unit sends the second prompt information to a server through the communication device when detecting that the filter mesh is in the filth blockage state. The server is an after-sales platform of a manufacturer of the air conditioner, the manufacturer may provide a corresponding value-added service according to the second prompt information, the user does not need to replace the filter mesh by himself/herself. Thus, the user experience of the user is further improved.

In some embodiments, when the indoor unit is powered on each time, the first prompt information is output in the form of audio through the loudspeaker. Thus, the user is prevented from ignoring the first prompt information.

In some embodiments, the levels of filth blockage of the filter mesh includes: "excellent", "ordinary filth blockage" and "serious filth blockage". Different levels of filth blockage correspond to different first prompt information. Thus, the user can know the current filth blockage level of the filter mesh of the indoor unit more clearly.

In these embodiments, "excellent", "ordinary filth blockage" and "serious filth blockage" correspond to different display icons, respectively.

Second embodiment:

As shown in FIG. 11, an apparatus 1100 for detecting a filter mesh of an indoor unit is provided in the second embodiment of the present application, the apparatus includes:

an acquisition module 1102 configured to obtain a first resistance difference value of the filter mesh under a preset air volume value;
a first determination module 1104 configured to determine a first external static pressure value during operation of the indoor unit; and
a second determining module 1106 configured to determine a dirty blockage situation of the filter according to a numerical relationship between the first external static pressure value and a preset external static pressure value, and the first resistance difference.

The apparatus 1100 for detecting the filter mesh of the indoor unit provided in this embodiment may detect whether there is an occurrence of filth blockage in the filter mesh of the indoor unit. When the indoor unit is in operation, air before heat exchange enters the indoor unit through a return air inlet of the indoor unit, the filter mesh of the indoor unit is arranged at the return air inlet and is used for filtering the air passing through the return air inlet, thereby achieving an air purification effect.

The filter mesh has an initial resistance value and a final resistance value. The initial resistance value is the resistance value of the filter mesh after leaving the factory, that is, the resistance value of the filter mesh in an initial clean state, the final resistance value is the resistance value of the filter mesh when the filter mesh needs to be cleaned or replaced. The resistance difference value may be obtained by calculating the difference value between the final resistance value and the initial resistance value. When the air conditioner is operated at different air volumes, the resistance difference values of the filter mesh are also different. When the indoor unit is controlled to be operated at the preset air volume, the first resistance difference value corresponding to the preset air volume is obtained. The first external static pressure value of the indoor unit is determined in the current operating state of the indoor unit. The static pressure difference value is obtained by calculating the difference value between the first external static pressure value and the preset external static pressure value. The preset external static pressure value is collected after mounting of the air conditioner is completed. That is, the external static pressure value collected by the filter mesh during operation of a new air conditioner is the preset external static pressure value. The first external static pressure value is the external static pressure value of the indoor unit during the operation of the indoor unit under the current hardware condition of the indoor unit. The preset external static pressure value is a pre-stored external static pressure value corresponding to the preset air volume value, and the external static pressure value is preset. Where, the preset external static pressure value is collected after mounting of the air conditioner is completed. That is, the external static pressure value collected by the filter mesh during operation of a new air conditioner is the preset external static pressure value. The dirty blockage situation of the filter may be determined according to the numerical relationship between the first external static pressure value and the preset external static pressure value, and the first resistance difference value.

It can be understood that, the external static pressure value collected during the operation of the air conditioner may be changed with the filth blockage of the filter mesh. Thus, the dirty blockage situation of the filter mesh can be determined according to the numerical relationship between the first external static pressure value and the preset external static pressure value, and the first resistance difference value.

The dirty blockage situation of the filter mesh is detected through the first resistance difference value of the filter mesh and the static pressure difference value of the air conditioner, such that the dirty blockage situation of the filter mesh can be determined in time in the operation process of the air conditioner, an accuracy and an instantaneity of determination of the dirty blockage situation of the filter mesh are improved as compared to the related art.

It is worth noting that, the resistance difference value is obtained by calculating the difference value between the initial resistance value and the final resistance value of the filter mesh, the resistance difference value is the resistance change value of the filter mesh from the initial clean state to the filth blockage state. The first resistance difference value is related to the air volume of the current indoor unit in operation. The first resistance difference value of the filter mesh is determined according to the air volume of the indoor unit in operation. The preset external static pressure value is the external static pressure value obtained by detecting the indoor unit equipped with the filter mesh in the initial clean state. The first external static pressure value is the external static pressure value collected in the operation process of the indoor unit of the air conditioner; That is, the first external static pressure value is the detected external static pressure value after the filter mesh has been operated for a period of time. Thus, according to the first external static pressure value, whether there is an occurrence of filth blockage of the filter mesh may be determined according to the numerical relationship between the first external static pressure value and the preset external static pressure value, and the first resistance difference value.

It can be understood that, when the indoor unit is operated at different air volumes, the external static pressure difference values will also be different. The correspondence relationship between first resistance difference values and the operating air volume values of the indoor unit is established. The calculated first external static pressure difference value is compared with the first resistance difference value corresponding to the preset air volume under different air volumes, such that the accuracy of determination of whether there exists the condition of filter mesh can be improved.

In any one of the aforesaid embodiments, a first determination module 1104 is specifically configured to collect the operating current value of the draught fan in the indoor unit, and obtain the first external static pressure value according to the operating current value and the preset air volume value of the indoor unit in operation.

In this embodiment, the indoor unit further includes a draught fan, and during the operation of the indoor unit at the constant air volume, current flows into the draught fan, such that the draught fan is operated at a corresponding rotation speed, thereby enabling the air conditioner to output the constant air volume.

In particular, a correspondence curve of rotation speeds and preset currents is stored in a local memory area of the air conditioner, the draught fan is controlled to be operated according to a rotation speed and a current in the correspondence curve. Thus, the control of constant air volume output of the indoor unit of the air conditioner is realized.

Before the air conditioner leaves the factory, the indoor unit of the air conditioner is tested under the environments of multiple external static pressure values, in the testing process, the rotation speed of the draught fan is adjusted, in order that the air volume output by the indoor unit reaches the preset air volume value. The current value and the external static pressure value in the current operating mode of the draught fan of the indoor unit are recorded according to the correspondence relationship. Thus, a correspondence relationship of air volumes, current values and external static pressure values is stored in the local memory area of the air conditioner When the indoor unit of the air conditioner is controlled to be operated at the preset air volume value, the operating current value of the draught fan is obtained. The corresponding first external static pressure value may be searched and determined through the operating current value and the preset air volume value according to the correspondence relationship pre-stored in the local memory area of the pre-existing air conditioner.

A correspondence relationship between air volumes and current values under various external static pressure values is stored before the air conditioner leaves the factory. In a controlling process of operation of the air conditioner, the first external static pressure value may be determined quickly by collecting the operating current value of the draught fan, and an accuracy of the obtained first external static pressure value is also improved.

The correspondence relationship between the air volume and the current value under each external static pressure value is stored before leaving the factory. In the process of controlling the operation of the air conditioner, the first external static pressure value can be quickly determined by collecting the operating current value of the draught fan, and the accuracy of the obtained first external static pressure value is also improved.

In some embodiments, a correspondence relationship between air volume values, current values of the draught fan and the external static pressure values is stored in the local memory area of the air conditioner in the form of table.

In these embodiments, during the operation of the air conditioner, the corresponding external static pressure value is determined by looking up the table according to the operating current value and the preset air volume value.

In some other embodiments, a correspondence relationship between air volume values, current values of the draught fan and the external static pressure values is stored in the local memory area of the air conditioner in the form of function.

In these embodiments, during the operation of the air conditioner, the operating current value and the preset air volume value are calculated through the function to obtain the external static pressure value.

In any one of the aforesaid embodiments, the first determination module 1104 is specifically configured to: look up the first correspondence relationship of the preset air volume values, the current values and the external static pressure values to determine the second external static pressure value according to the first correspondence relationship, obtain the static pressure correction value, and calculate the difference value between the second external static pressure value and the static pressure correction value to obtain the first external static pressure value.

In this arrangement, the indoor unit may be operated at different air volumes. In the determining process of the first external static pressure value, the first correspondence relationship between current values and corresponding external static pressure values needs to be found by looking up a table according to the preset air volume value, then, the corresponding second external static pressure value is searched according to the operating current value of the draught fan and the first correspondence relationship. Not only the resistance of the filter mesh is counted into the second external static pressure value, other structural components in the indoor unit may also generate resistance to the exhausted air, and the resistance to the exhausted air may also be counted as the second external static pressure value. Thus, after the second external static pressure value is obtained, the second external static pressure value is corrected according to the static pressure correction value, and the first external static pressure value corresponding to the preset air volume value is obtained.

In the present application, in the process of determination of the first external static pressure value corresponding to the preset air volume value, the searched second external static pressure value is corrected through the static pressure correction value. Thus, the obtained first static pressure value is only affected by the resistance value of the filter mesh, and it is ensured that the first external static pressure value and the preset external static pressure value can reflect the actual condition of filth blockage of the filter mesh.

In any one of the aforesaid embodiments, the first determination module 1104 is specifically configured to obtain an inclination angle of the air guide strip, determine a second correspondence relationship between inclination angles and correction values, and obtain the corresponding static pressure correction value through the second correspondence, according to the inclination angle.

In this embodiment, the air guide strip may also generate a resistance to the exhausted air of the indoor unit, thereby affecting the determination of the static pressure value of the indoor unit. When the angles of the air guide strips are different, the resistances to the exhausted air of the indoor unit are also different. Before the indoor unit leaves the factory, resistance values generated by the air guide strip and the inclination angle of the air guide strip are stored according to a correspondence relationship. The resistance to the exhausted air of the indoor unit, which is generated by the air guide strip, is the static pressure correction value. According to the inclination angle of the air guide strip of the indoor unit, the corresponding resistance to the exhausted air of the indoor unit (i.e., the static pressure correction value), which is generated by the air guide strip, may be found through the second correspondence relationship. In order to eliminate the influence of the air guide strip on the external static pressure value, the resistance value to the exhausted air of the indoor unit, which is generated by the air guide strip, is used as the static pressure correction value. By calculating the second external static pressure value and the static pressure correction value, such that the obtained first static pressure value is only influenced by the resistance value of the filter mesh. Thus, the first external static pressure value and the preset external static pressure value may reflect the actual condition of filth blockage of the filter mesh accurately.

In some embodiments, the inclination angle of the air guide strip is determined by collecting the rotation angle of the driving motor.

In some other embodiments, a sensor is provided on the air guide strip or on the output shaft of the driving motor, the sensor is connected to the processor of the indoor unit, and the sensor may collect the inclination angle of the air guide strip directly.

In any one of the aforesaid embodiments, the apparatus 1100 for detecting the filter mesh of the indoor unit includes:

a timing module 1108 is configured to collect the current air volume value during the operation of the draught fan, search the corresponding air volume threshold range according to the preset air volume value, and determine whether a time duration of the condition of the current air volume value being within the air volume threshold range reaches a preset time duration.

In this arrangement, it is necessary to determine that the air volume output by the draught fan reaches a preset value before collecting the operating current value, and the output air volume is kept in a stable state. Subtraction/addition operation is performed on the preset air volume value to obtain the air volume threshold range. It can be determined that the draught fan is operated at the preset air volume value at this time, if the air volume value output by the draught fan is in the air volume threshold range. The time duration of the condition of the current air volume value being within the air volume threshold range is counted, and it is determined that the draught fan is in a state of outputting air volume value stably, if the preset time duration is reached. In the preset application, whether the draught fan reaches a constant output preset air volume value or not before the operating current value is collected is determined first, thus, the acquisition of the operating current value corresponding to the preset air volume value is realized. By recording the time duration of the current air volume value within the air volume threshold range that reaches the preset time duration, and then collecting the operating current value, it thus can be further ensured that the collected operating current value is the current value of the draught fan in the operation state of constant air volume, an accuracy of the external static pressure value obtained subsequently according to the operating current value is improved.

In any one of the aforesaid embodiments, the acquisition module 1102 is specifically configured to determine a third correspondence relationship between an air volume value and a resistance difference value of the filter mesh, and search the corresponding first resistance difference value through the preset air volume value according to the third correspondence relationship.

In this embodiment, the resistance to the air outlet of the indoor unit, which is generated by the filter mesh, is the hardware characteristic of the filter mesh itself. That is, the initial resistance value of the filter mesh is a fixed value. Before the filter mesh leaves the factory, the durability of the filter mesh is detected to determine the final resistance value of the filter mesh. That is, when the filter mesh reaches the final resistance value, the user is recommended to replace the filter mesh.

Since the air volume output by the indoor unit is different, the influence of the resistance value of the filter mesh on the air output of the indoor unit is also different. Before the air conditioner leaves the factory, simulation operation of the indoor unit is performed at various air volume values, and the final resistance values of the filter mesh generated when the indoor unit is operated at the various air volume values are collected. Thus, the first resistance difference values of the filter mesh corresponding to the various air volume values are calculated, and the first resistance difference values and the various air volume values are stored according to the third correspondence. After the mounting of the air conditioner is completed, the determination of the air volume value being the preset air volume value output constantly during the operation of the indoor unit is performed, and the first resistance difference value corresponding to the preset air volume value is searched according to the third correspondence relationship.

In any one of the aforesaid embodiments, the acquisition module 1102 is specifically configured to obtain a second resistance difference value of the filter mesh and a rated air volume value of the indoor unit, and calculate the first resistance difference value according to the rated air volume value, the preset air volume value and the second resistance difference value.

In this embodiment, the resistance to the air outlet of indoor unit, which is generated by the filter mesh, is the hardware characteristic of the filter mesh itself. That is, the initial resistance value of the filter mesh is a fixed value. Before the filter mesh leaves the factory, the durability of the filter mesh is detected to determine the final resistance value of the filter mesh. That is, when the filter mesh reaches the final resistance value, the user is recommended to replace the filter mesh. A difference value between the initial resistance value and the final resistance value is calculated to obtain the second resistance difference value.

Since the air volume output by the indoor unit is different, the influence of the resistance value of the filter mesh on the air output of the indoor unit is also different. Before the indoor unit leaves the factory, the local memory area pre-stores a calculation formula being capable of calculating the first resistance difference value according to the second resistance difference value. In particular, the formula is expressed as:

$$D_1 = A \times D_2 \times (A_{Fn}/A_{F0})^2;$$

Where, $D_1$ represents the first resistance difference value, $D_2$ represents a second resistance difference value, A represents a coefficient, $A_{F0}$ represents a rated air volume value, $A_{FN}$ represents a preset air volume value.

In the present application, the obtained preset air volume value, and the rated air volume value and the second resistance difference value pre-stored in the local memory area are substituted into the aforesaid formula, the first resistance difference value can be calculated. Where, the coefficient A ranges from 0.8 to 1.2. The first resistance difference value calculated by the aforesaid formula is the resistance difference value of the filter mesh corresponding to the preset air volume value. Thus, the accuracy of the subsequent step of calculating according to the first resistance difference value is improved, the accuracy of determination of the dirty blockage situation of the filter mesh is improved, and the possibility of erroneous judgement is reduced accordingly.

In any one of the aforesaid embodiments, the acquisition module 1102 is further configured to obtain a first preset resistance value and a second preset resistance value of the filter mesh, and calculate a difference value between the first preset resistance value and the second preset resistance value so as to obtain the second resistance difference value.

In this embodiment, the first resistance value of the filter mesh is the initial resistance value of the filter mesh, the resistance to the air flowing through the filter mesh, which is generated by the filter mesh, is the hardware characteristic of the filter mesh. The second preset resistance value is the final resistance value of the filter mesh, and the final resistance value of the filter mesh is obtained by detecting the durability of the filter mesh. The difference value between the initial resistance value and the final resistance value is calculated and the second resistance difference value may be obtained. The second resistance difference value is the hardware attribute of the filter mesh.

It can be understood that, since the second resistance difference value is the hardware attribute value of the filter mesh, the second resistance difference value is thus directly labeled on the filter mesh or recorded on a packing description of the filter mesh. After the user replaces the filter mesh with a new filter mesh, the second resistance difference value is input into the indoor unit of the air conditioner through the controller. The indoor unit may calculate the first resistance difference value according to the formula in the pre-stored local memory area.

In any one of the aforesaid embodiments, the second determination module 1106 is specifically configured to obtain a static pressure difference value according to the first external static pressure value and the preset external static pressure value; and determine the dirty blockage situation of the filter mesh according to a numerical relationship between the first resistance difference value and the static pressure difference value.

In this embodiment, the difference value between the first external static pressure value and the preset external static pressure value is calculated to obtain the static pressure difference value. Since the first external static pressure value and the preset external static pressure value correspond to the preset air volume of the indoor unit, where the first external static pressure value is the external static pressure value collected when the indoor unit is operated at the preset air volume value under the current condition of the filter mesh, the preset external static pressure value is the external static pressure value collected when the indoor unit is operated at the preset air volume value before the indoor unit leaves the factory, that is, when the filter mesh is in the initial state. Thus, the static pressure difference value calculated according to the first external static pressure value and the preset external static pressure value is also corresponding to the preset air volume value. The calculated static pressure difference value may accurately reflect the actual condition of filth blockage of the filter mesh. Thus, the dirty blockage situation of the filter mesh may be accurately determined according to the first resistance difference value and the static pressure difference value of the filter mesh in the initial state.

It can be understood that, when the indoor unit is operated at different air volumes, the external static pressure differences are also different, a correspondence relationship between the first resistance difference value and the air volume of the indoor unit is established. The dirty blockage situation of the filter mesh under different air volumes is judged according to the first external static pressure value corresponding to the preset air volume value and the numerical relationship between the preset external static pressure value and the first resistance difference value, an accuracy of determination of whether there is an occurrence of filth blockage of the filter mesh may be improved.

In any one of the aforesaid embodiments, the second determination module 1106 is specifically configured to calculate a ratio of the static pressure difference value to the first resistance difference value and obtain the ratio, and determine that the filter mesh is in a filth blockage state by determining whether the ratio is greater than a preset value.

In this embodiment, the first resistance difference value is obtained by calculating the difference value between the initial resistance value and the final resistance value of the filter mesh, the first resistance difference value is a resistance variation value of the filter mesh from the initial clean state to the filth blockage state. The preset external static pressure value is the external static pressure value obtained by detecting the indoor unit equipped with the filter mesh in the initial clean state. The first external static pressure value is the external static pressure value collected in the operation process of the indoor unit of the air conditioner That is, the first external static pressure value is the detected external static pressure value after the filter mesh has been operated for a period of time. A ratio of the static pressure difference value to the first resistance difference value is calculated and a specific ratio is obtained. The aforesaid ratio may reflect the level of filth blockage of the filter mesh. The preset value is preset according to the ratio. When the ratio reaches the preset value, it is considered that the filter mesh is in the filth blockage state, so that a detection regarding whether the filter mesh is in a filth blockage state is realized.

In any one of the aforesaid embodiments, the apparatus 1110 for detecting the filter mesh of the indoor unit further includes:
a prompt module 1110 configured to output first prompt information and/or send second prompt information to a server when the filter mesh is in the filth blockage state.

In this embodiment, the air conditioner further includes a remote control, the remote control is provided with a first display unit, and the indoor unit is provided with a second display unit and a loudspeaker.

When detecting that the filter mesh is in the filth blockage state, the indoor unit displays the first prompt information through the first display unit and/or the second display unit on the remote control. The first prompt information includes text information and icon information, in order to realize displaying information indicating that the filter mesh is dirty and blocked to the user. The first prompt information may also be output in the form of audio through a loudspeaker in the indoor unit.

The indoor unit further includes a communication device, the indoor unit sends the second prompt information to the server through the communication device when detecting that the filter mesh is the filth blockage state. The server is an after-sales platform of a manufacturer. The manufacturer may provide a corresponding value-added service according to the second prompt information. Thus, the user does not need to replace the filter mesh by himself/herself, and the user experience of the user is further improved accordingly.

In some embodiments, when the indoor unit is powered on each time, the first prompt information is output in the form of audio through the loudspeaker. Thus, the user is prevented from ignoring the first prompt information.

In some embodiments, the levels of filth blockage of the filter mesh include "excellent", "ordinary filth blockage " and "serious filth blockage". Different levels of filth blockage correspond to different first prompt information, such that the user can know the current level of filth blockage of the filter mesh of the indoor unit more clearly.

Third Embodiment:

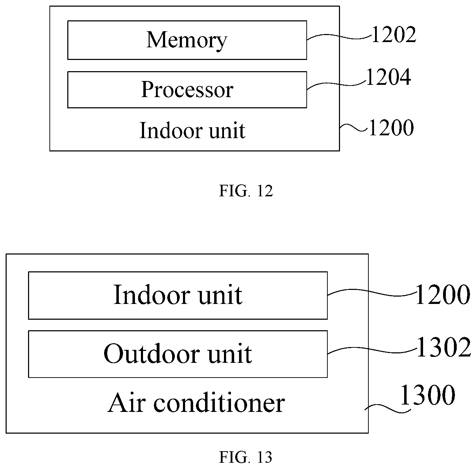

As shown in FIG. 12, an indoor unit 1200 is provided in a first embodiment of the present application. The indoor unit 1200 includes a housing, a filter mesh disposed in an air duct, a memory 1202, and a processor 1204.

The housing is provided with the air duct, and the filter mesh is disposed in the air duct. A program or an instruction is stored in the memory 1202. The processor 1204 is configured to execute the program or the instruction stored in the memory 1202 so as to implement the steps of the method for detecting the filter mesh of the indoor unit in the first embodiment, and thus has all beneficial effects of the method for detecting the filter mesh of the indoor unit in the first embodiment. The aforesaid beneficial effects are not repeatedly described herein.

The indoor unit 1200 provided in the present application includes the housing and the filter mesh, the air duct is formed in the housing. The indoor unit further includes a return air inlet. When the indoor unit 1200 is in operation, air before heat exchange enters the air duct through the return air inlet, the filter mesh is arranged in the air duct, the air flowing through the air duct is filtered by the filter mesh, and thus an air purification effect is achieved.

In any one of the aforesaid embodiments, the indoor unit 1200 further includes an air guide strip and a driving motor.

The air guide strip is disposed at an air outlet of the air duct. An output of the driving motor is connected to the air guide strip. The driving motor is configured to drive the air guide strip so as to adjust an inclination angle.

In this embodiment, the indoor unit 1200 further includes the air guide strip and the driving motor. The air guide strip is disposed at the air outlet of the air duct and is located on an outer side of the filter mesh. That is, during the operating process of the indoor unit 1200, after the exhausted air is filtered through the filter mesh, an air outlet direction of the indoor unit 1200 may be changed through the air guide strip. The driving motor is connected to the controller of the air conditioner, and the user may control the driving motor to move through the controller to enable the air guide strip to rotate to form a specified angle, thereby adjusting the air outlet direction of the air conditioner.

In any one of the aforesaid embodiments, the indoor unit 1200 further includes a display device and/or a communication device.

The display device is connected to the processor 1204 and is configured to output first prompt information.

The communication device is connected to the processor 1204 and is configured to send second prompt information to a server.

In this design, the indoor unit 1200 further includes the display device and/or the communication device. The display device and/or the communication state are connected to the processor 1204 of the indoor unit 1200. When detecting that the filter mesh of the indoor unit 1200 is in a filth blockage state, the display device may display and output the first prompt information. The display device outputs the first prompt information to notify the user that the filter mesh is currently in a filth blockage state, and the filter mesh needs to be replaced or cleaned. The communication device may send the second prompt information to the server, the manufacturer may read the second prompt information in the server, and provide a corresponding value-added server according to the second prompt information. The user does not need to replace the filter mesh by himself/herself, the user experience of the user is improved accordingly.

In some embodiments, the air conditioner further includes a remote control, the remote control is provided with a first display unit, the indoor unit 1200 is provided with a second display unit and a loudspeaker.

The indoor unit 1200 displays the first prompt information through the first display unit and/or the second display unit on the remote control when detecting that the filter mesh is in the filth blockage state, and the first prompt information includes text information and icon information. Thus, displaying information indicating that the filter mesh is in the filth blockage state is realized. The first prompt information may also be output in the form of audio through the loudspeaker in the indoor unit 1200.

In some embodiments, when the indoor unit 1200 is powered on each time, the first prompt information is output in an audio form through the loudspeaker, thereby preventing the user from ignoring the first prompt information.

In some embodiments, the levels of filth blockage of the filter mesh include "excellent", "ordinary filth blockage" and "serious filth blockage". Different filth blockage levels correspond to different first prompt information. Thus, the user can know the current level of filth blockage of the filter mesh of the indoor unit 1200 more clearly.

Fourth Embodiment:

As shown in FIG. 13, an air conditioner 1300 is provided in the first embodiment of the present application. The air conditioner includes an indoor unit 1200 and an outdoor unit 1302.

The outdoor unit 1302 is connected to the indoor unit 1200, a compressor is further provided in the outdoor unit 1302. The compressor may compress a refrigerant in a refrigerant pipeline, and the compressed refrigerant flows through the indoor unit 1200 and the outdoor unit 1302 through the refrigerant pipeline, thereby achieving functions of refrigeration and heating of the air conditioner 1300.

The indoor unit 1200 is selected as the indoor unit 1200 in the third embodiment, and thus has all beneficial effects of the indoor unit 1200 in the third embodiment. The aforesaid beneficial effects are not repeatedly described herein.

Fifth embodiment:

A readable storage medium is provided in the fifth embodiment of the present application. The storage medium stores a program when the computer program is executed by a processor, the method for detecting the filter mesh of the indoor unit in any one of the aforesaid embodiments is implemented. Thus, the storage medium has all beneficial technical effects of the method for detecting the filter mesh of the indoor unit in any one of the aforesaid embodiments.

Where, the readable storage medium may be such as a read-only memory (Read-Only Memory, ROM), a random access memory (Random Access Memory, RAM), a magnetic disk, or an optical disc, etc.

It needs to be explained that, the term of "a plurality of" used in the claims, the description and the accompanying figures of the description refers to two or more than two, unless otherwise there is additional explicit definition. Directions or location relationships represented by terms such as "up", "down", are the directions or location relationships shown in the accompanying figures, and are only intended to describe the present application conveniently and for the purpose of conciseness of description of the present application, and thus should not be interpreted as indicating or implying that a device or a component indicated by the terms must have specific locations and be constructed and manipulated according to the specific locations. Therefore, these terms shouldn't be regarded as limitation to the present application. Terms such as "connect", "mount", "fix", etc., should be generalizedly interpreted. For example, "connect" may be interpreted as fixed connection among a plurality of objects, and may also be a detachable connection among the plurality of objects, or be an integral connection. "Connect" may be further interpreted as a direct connection among the plurality of objects or an indirect connection among the plurality of objects through intermediary. For the person of ordinary skill in the art, the specific meanings of the terms in the present application may be interpreted according to specific conditions of the terms.

In the claims, the description and the accompanying figures of the present application, the description of the reference terms such as "one embodiment", "some embodiments", "detailed description of embodiments" and the like means that the specific technical features, structures, materials or characteristics which are described with reference to the embodiments or the examples are included in at least one embodiment or example of the present application. In the claims, the description and the accompanying figures of the present application, schematic expressions of the terms mentioned above are not necessarily directed to the same embodiment or example. Furthermore, the specific technical features, structures, materials, or characteristics described above may be combined in any suitable manner in any of the one or plurality of embodiments or examples.

The foregoing embodiments are only some preferable embodiments of the present application, and these embodiments are not intended to limit the present application. It is obvious to the person of ordinary skill in the art that, various modifications and changes may be made in the present application. Any modification, equivalent replacement, improvement, and the like, which are made within the spirit and the principle of the present application, should all be included in the protection scope of the claims of the present application.

**Claims**

1. A method for detecting a filter mesh of an indoor unit, wherein the indoor unit comprises the filter mesh, the method for detecting the filter mesh comprises: obtaining a first resistance difference value of the filter mesh under a preset air volume value; determining a first external static pressure value in an operation process of the indoor unit; determining a dirty blockage situation of the filter mesh according to a numerical relationship between the first external static pressure value and a preset external static pressure value, and the first resistance difference value.

2. The method for detecting the filter mesh of the indoor unit according to claim 1, wherein the indoor unit further comprises a draught fan, and the step of determining the first external static pressure value in the operation process of the indoor unit specifically comprises: collecting an operating current value of the draught fan; determining the first external static pressure value according to the preset air volume value and the operating current value.

3. The method for detecting the filter mesh of the indoor unit according to claim 2, wherein the step of determining the first external static pressure value according to the preset air volume value and the operating current value specifically comprises: searching a first correspondence relationship between a current value and an external static pressure value according to the preset air volume value; determining a second external static pressure value according to the operating current value and the first correspondence relationship; obtaining a static pressure correction value, and calculating the first external static pressure value according to the second external static pressure value and the static pressure correction value.

4. The method for detecting the filter mesh of the indoor unit according to claim 3, wherein the indoor unit comprises an air guide strip arranged at an air outlet of the indoor unit, the step of obtaining the static pressure correction value specifically comprises: collecting an inclination angle of the air guide strip; obtaining a second correspondence relationship between the inclination angle and the correction value, and searching the static pressure correction value according to the inclination angle and the second correspondence relationship.

5. The method for detecting the filter mesh of the indoor unit according to claim 4, wherein before the step of collecting the operating current value of the draught fan, the method further comprises: collecting a current air volume value output by the draught fan; determining an air volume threshold range according to the preset air volume value, and determining that a time duration of a condition of a current air volume value being within the air volume threshold range reaches a preset time duration.

6. The method for detecting the filter mesh of the indoor unit according to any one of claims 2-5, wherein the step of determining the first resistance difference value under the corresponding first resistance difference value according to the preset air volume value specifically comprises: obtaining a third correspondence relationship between multiple air volume values and multiple filter mesh resistance difference values; searching the first resistance difference value according to the preset air volume value and the third correspondence relationship.

7. The method for detecting the filter mesh of the indoor unit according to any one of claims 2-5, wherein the step of determining the first resistance difference value according to the preset air volume value specifically comprises: obtaining a second resistance difference value of the filter mesh; obtaining a rated air volume value of the indoor unit; calculating the first resistance difference value according to the rated air volume value, the preset air volume value and the second resistance difference value.

8. The method for detecting the filter mesh of the indoor unit according to claim 7, wherein the step of obtaining the second resistance difference value of the filter mesh specifically comprises: obtaining a first preset resistance value and a second preset resistance value of the filter mesh; calculating a second resistance difference value according to the first preset resistance value and the second preset resistance value.

9. The method for detecting the filter mesh of the indoor unit according to any one of claims 1-5, wherein the step of determining the dirty blockage situation of the filter mesh according to the numerical relationship between the first external static pressure value and the preset external static pressure value, and the first resistance difference value specifically comprises: obtaining a static pressure difference value according to the first external static pressure value and the preset external static pressure value; determining the dirty blockage situation of the filter mesh according to a numerical relationship between the first resistance difference value and the static pressure difference value.

10. The method for detecting the filter mesh of the indoor unit according to claim 9, wherein the step of determining the dirty blockage situation of the filter mesh according to the numerical relationship between the first resistance difference value and the static pressure difference value specifically comprises: calculating a ratio of the static pressure difference value to the first resistance difference value; determining that the filter mesh is in a filth blockage state if the ratio is greater than a preset value.

11. The method for detecting the filter mesh of the indoor unit according to claim 10, further comprising: outputting first prompt information and/or sending second prompt information to a server on the basis that the filter mesh is in the filth blockage state.

12. An apparatus for detecting a filter mesh of an indoor unit, wherein the indoor unit comprises the filter mesh, the apparatus for detecting the filter mesh comprises: an acquisition module configured to obtain a first resistance difference value of the filter mesh under a preset air volume value; a first determination module configured to determine a first external static pressure value during operation of the indoor unit; a second determining module configured to determine a dirty blockage situation of the filter according to a numerical relationship between the first external static pressure value and a preset external static pressure value, and the first resistance difference.

13. An indoor unit, comprising: a housing, wherein an air duct is formed in the housing; a filter mesh disposed in the air duct; a memory which stores a program or an instruction; a processor, the processor is configured to execute the program or the instruction stored in the memory to implement steps of the method for detecting the filter mesh of the indoor unit according to any one of claims 1-11.

14. The indoor unit according to claim 13, further comprising: an air guide strip disposed at an air outlet of the air duct; a driving motor, wherein an output of the driving motor is connected to the air guide strip, and the driving motor is configured to adjust an inclination angle by driving the air guide strip.

15. An air conditioner, comprising: the indoor unit according to claim 13 or claim 14; and an outdoor unit connected to the indoor unit.

16. A readable storage medium which stores a program or an instruction, wherein when the program or the instruction is executed by a processor, the steps of the method for detecting the filter mesh of the indoor unit according to any one of claims 1-11 are implemented.

Start

| Obtain a first resistance difference value of the filter mesh under a preset air volume value | ~102 |

| Determine a first external static pressure value in an operation process of the indoor unit | ~104 |

| Determine a dirty blockage situation of the filter mesh according to a numerical relationship between the first external static pressure value and the preset external static pressure value, and the first resistance difference value | ~106 |

End

FIG. 1

Start

| Collect an operating current value of the draught fan | ~202 |

| Determine the first external static pressure value according to the preset air volume value and the operating current value | ~204 |

End

FIG. 2

```
                          ┌─────────────┐
                          │    Start    │
                          └─────────────┘
                                 │
                                 ▼
   ┌──────────────────────────────────────────────────────────┐
   │ Search a first correspondence relationship between a      │
   │ current value and an external static pressure value       │──── 302
   │ according to the preset air volume value                  │
   └──────────────────────────────────────────────────────────┘
                                 │
                                 ▼
   ┌──────────────────────────────────────────────────────────┐
   │ Determine a second external static pressure value         │
   │ according to the operating current value and the first    │──── 304
   │ correspondence relationship                               │
   └──────────────────────────────────────────────────────────┘
                                 │
                                 ▼
   ┌──────────────────────────────────────────────────────────┐
   │         Obtain a static pressure correction value         │──── 306
   └──────────────────────────────────────────────────────────┘
                                 │
                                 ▼
   ┌──────────────────────────────────────────────────────────┐
   │ Calculate the difference value between the second external│
   │ static pressure and the static pressure correction value  │──── 308
   │ to obtain the first external static pressure value        │
   └──────────────────────────────────────────────────────────┘
                                 │
                                 ▼
                          ┌─────────────┐
                          │     End     │
                          └─────────────┘
```

FIG. 3

```
                          ┌─────────────┐
                          │    Start    │
                          └─────────────┘
                                 │
                                 ▼
   ┌──────────────────────────────────────────────────────────┐
   │       Obtain an inclination angle of an air guide strip   │──── 402
   └──────────────────────────────────────────────────────────┘
                                 │
                                 ▼
   ┌──────────────────────────────────────────────────────────┐
   │ Determine a second correspondence relationship between    │──── 404
   │ the inclination angle and the correction value            │
   └──────────────────────────────────────────────────────────┘
                                 │
                                 ▼
   ┌──────────────────────────────────────────────────────────┐
   │ Search the static pressure correction value according to  │──── 406
   │ the inclination angle and the second correspondence       │
   │ relationship                                              │
   └──────────────────────────────────────────────────────────┘
                                 │
                                 ▼
                          ┌─────────────┐
                          │     End     │
                          └─────────────┘
```

FIG. 4

Start

Collect a current air volume value during operation of the draught fan — 502

Determine an air volume threshold range according to the preset air volume value — 504

Determine that a time duration of the current air volume value being within the air volume threshold range reaches a preset time period — 506

End

FIG. 5

Start

Determine a third correspondence relationship between multiple air volume values and multiple filter mesh resistance difference values — 602

Determine the first resistance difference value according to the preset air volume value and the third correspondence relationship — 604

End

FIG. 6

Start

Obtain a second resistance difference value of the filter mesh — 702

Determine the first resistance difference value according to the rated air volume value, the preset air volume value and the second resistance difference value — 704

End

FIG. 7

Start

Obtain a first preset resistance value and a second preset resistance value of the filter mesh — 802

Obtain a second resistance difference value by calculating the difference value between the first preset resistance value and the second preset resistance value — 804

End

FIG. 8

Start

Obtain a static pressure difference value according to the first external static pressure value and the preset external static pressure value — 902

Determine the dirty blockage situation of the filter mesh according to the numerical relationship between the first resistance difference value and the static pressure difference value — 904

End

FIG. 9

Start

Calculate a ratio of the static pressure difference value to the
first resistance difference value to obtain the ratio —— 1002

Determine whether the ratio is greater than a preset
ratio —— 1004

Yes

No

The filter mesh is in the filth
blockage state —— 1006

The filter mesh is in the filth
blockage state —— 1010

Output first prompt
information and/or transmit
second prompt information to
a server —— 1008

End

FIG. 10

| Acquisition module | —— 1102 |
| First determination module | —— 1104 |
| Second determination module | —— 1106 |
| Timing module | —— 1108 |
| Prompting module | —— 1110 |

Apparatus for detecting filter mesh
of indoor unit —— 1100

FIG. 11

| Memory | ⟋1202 |
| Processor | ⟋1204 |
| Indoor unit | ~1200 |

FIG. 12

| Indoor unit | ⟋1200 |
| Outdoor unit | ⟋1302 |
| Air conditioner | ~1300 |

FIG. 13

## INTERNATIONAL SEARCH REPORT

| International application No. |
| --- |
| **PCT/CN2022/082789** |

| A. | CLASSIFICATION OF SUBJECT MATTER |
| --- | --- |

F24F 11/39(2018.01)i; F24F 11/52(2018.01)i; F24F 11/64(2018.01)i; F24F 11/77(2018.01)i; F24F 3/16(2021.01)i; F24F 13/28(2006.01)i; F24F 110/40(2018.01)i

According to International Patent Classification (IPC) or to both national classification and IPC

| B. | FIELDS SEARCHED |
| --- | --- |

Minimum documentation searched (classification system followed by classification symbols)

F24F

Documentation searched other than minimum documentation to the extent that such documents are included in the fields searched

Electronic data base consulted during the international search (name of data base and, where practicable, search terms used)

CNABS, CNKI, DWPI, VEN: 室内机, 滤网, 脏堵, 检测, 设定风量, 阻力, 差值, 静压值, indoor unit, filter, dirty blockage, detect, set air volume, resistance, difference, static pressure value

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 107192099 A (GUANGDONG MIDEA HEATING & VENTILATION EQUIPMENT CO., LTD. et al.) 22 September 2017 (2017-09-22) description, paragraphs [0043]-[0087], and figures 1-11 | 1-16 |
| A | CN 110486890 A (QINGDAO HAIER AIR CONDITIONER GENERAL CO., LTD.) 22 November 2019 (2019-11-22) entire document | 1-16 |
| A | CN 106440186 A (GUANGDONG MEDIA REFRIGERATION EQUIPMENT CO., LTD. et al.) 22 February 2017 (2017-02-22) entire document | 1-16 |
| A | CN 110529970 A (NINGBO AUX ELECTRIC CO., LTD.) 03 December 2019 (2019-12-03) entire document | 1-16 |
| A | JP 2009243848 A (MITSUBISHI HEAVY INDUSTRIES LTD.) 22 October 2009 (2009-10-22) entire document | 1-16 |
| A | JP 2009228992 A (FUJI INDUSTRIES CO., LTD.) 08 October 2009 (2009-10-08) entire document | 1-16 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 June 2022** | **22 June 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/082789**

| Patent document cited in search report | | | Publication date (day/month/year) | Patent family member(s) | Publication date (day/month/year) |
|---|---|---|---|---|---|
| CN | 107192099 | A | 22 September 2017 | None | |
| CN | 110486890 | A | 22 November 2019 | None | |
| CN | 106440186 | A | 22 February 2017 | None | |
| CN | 110529970 | A | 03 December 2019 | None | |
| JP | 2009243848 | A | 22 October 2009 | None | |
| JP | 2009228992 | A | 08 October 2009 | None | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202110855017